# EUROPEAN PATENT APPLICATION

(11) **EP 3 079 427 A1**
(43) Date of publication of application: **12.10.2016**
(21) Application number: 13900387.5
(22) Date of filing: 25.12.2013
(51) Int. Cl.: H04W 72/12

(54) **METHOD AND DEVICE FOR OBTAINING TDD UPLINK AND DOWNLINK RATIO**

(71) Applicant: Huawei Technologies Co., Ltd., Longgang District Shenzhen, Guangdong 518129 (CN)
(72) Inventor: QUAN, Wei, Shenzhen Guangdong 518129 (CN); YANG, Xiaodong, Shenzhen Guangdong 518129 (CN); LI, Chaojun, Shenzhen Guangdong 518129 (CN); ZHANG, Jian, Shenzhen Guangdong 518129 (CN); HU, Zhenxing, Shenzhen Guangdong 518129 (CN)
(74) Representative: Goddar, Heinz J.
(86) International application number: PCT/CN2013/090400
(87) International publication number: WO 2015/096054

(57) **Abstract**

Embodiments of the present invention disclose a TDD uplink-downlink configuration acquiring method and apparatus, which relate to the field of communications systems, and can reduce system signaling overheads. The method includes: first sending, by a network-side node, physical downlink control signaling and a configuration message to user equipment, and then acquiring, by the user equipment, TDD uplink-downlink configurations separately corresponding to serving cells from at least one TDD uplink-downlink configuration command according to a correspondence between each serving cell of the serving cells of the UE and a location, in the physical downlink control signaling, of a corresponding TDD uplink-downlink configuration command. The embodiments of the present invention apply to a case that UE applies, for serving cells, TDD uplink-downlink configurations.

## Description

### TECHNICAL FIELD

The present invention relates to the field of communications systems, and in particular, to a TDD uplink-downlink configuration acquiring method and apparatus.

### BACKGROUND

In an LTE (Long Time Evolution, Long Term Evolution) system, two frame structures are supported: an FDD (Frequency Division Duplexing, frequency division duplex) frame structure and a TDD (Time Division Duplexing, time division duplex) frame structure. The TDD frame structure supports seven different uplink-downlink configurations, and a network-side node configures TDD uplink-downlink configurations corresponding to the serving cells of the UE according to traffic volumes of communication performed between UE (User Equipment, user equipment) and serving cells. Generally, the network-side node sends the TDD uplink-downlink configurations corresponding to the serving cells to the UE by using a system broadcast message or a dedicated RRC (Radio Resource Control, radio resource control) message.

Currently, the network-side node dynamically changes the TDD uplink-downlink configurations of the serving cells, so that the serving cells of the UE can better adapt to variation of different traffic volumes. Specifically, the UE configures a corresponding TDD uplink-downlink configuration for a serving cell according to a TDD uplink-downlink configuration command of the serving cell carried in physical downlink control signaling sent by the network-side node.

However, the physical downlink control signaling received by the UE carries a TDD uplink-downlink configuration command of only one serving cell; therefore, when the UE configures corresponding TDD uplink-downlink ratios for serving cells, the UE needs to receive multiple pieces of physical downlink control signaling, thereby causing system signaling overheads to be relatively large.

### SUMMARY

Embodiments of the present invention provide a TDD uplink-downlink configuration acquiring method and apparatus, which can reduce system signaling overheads.

According to a first aspect, an embodiment of the present invention provides a TDD uplink-downlink configuration acquiring method, including:
receiving, by user equipment UE, physical downlink control signaling sent by a network-side node, where the physical downlink control signaling includes at least one TDD uplink-downlink configuration command, and each TDD uplink-downlink configuration command of the at least one TDD uplink-downlink configuration command separately carries a corresponding TDD uplink-downlink configuration;
receiving, by the UE, a configuration message sent by the network-side node, where the configuration message carries a correspondence between each serving cell of serving cells of the UE and a location, in the physical downlink control signaling, of a corresponding TDD uplink-downlink configuration command; and
acquiring, by the UE, TDD uplink-downlink configurations separately corresponding to the serving cells of the UE from the at least one TDD uplink-downlink configuration command according to the correspondence between each serving cell of the serving cells of the UE and a location, in the physical downlink control signaling, of a corresponding TDD uplink-downlink configuration command.

With reference to the first aspect, in a first possible implementation manner of the first aspect, after the step of acquiring, by the UE, TDD uplink-downlink configurations separately corresponding to the serving cells of the UE from the at least one TDD uplink-downlink configuration command according to the correspondence between each serving cell of the serving cells of the UE and a location, in the physical downlink control signaling, of a corresponding TDD uplink-downlink configuration command, the method further includes:
applying, by the UE, for the serving cells of the UE, the corresponding TDD uplink-downlink configurations.

With reference to the first aspect or the first possible implementation manner of the first aspect, in a second possible implementation manner of the first aspect, the configuration message carries a correspondence between an identifier of each serving cell of the serving cells of the UE and an identifier of the location, in the physical downlink control signaling, of the corresponding TDD uplink-downlink configuration command; and
the step of acquiring, by the UE, TDD uplink-downlink configurations separately corresponding to the serving cells of the UE from the at least one TDD uplink-downlink configuration command according to the correspondence between each serving cell of the serving cells of the UE and a location, in the physical downlink control signaling, of a corresponding TDD uplink-downlink configuration command includes:
acquiring, by the UE, the TDD uplink-downlink configurations separately corresponding to the serving cells of the UE from the at least one TDD uplink-downlink configuration command according to the correspondence between an identifier of each serving cell of the serving cells of the UE and an identifier of the location, in the physical downlink control signaling, of the corresponding TDD uplink-downlink configuration command.

With reference to the second possible implementation manner of the first aspect, in a third possible implementation manner of the first aspect, the step of acquiring, by the UE, the TDD uplink-downlink configurations separately corresponding to the serving cells of the UE from the at least one TDD uplink-downlink configuration command according to the correspondence between an identifier of each serving cell of the serving cells of the UE and an identifier of the location, in the physical downlink control signaling, of the corresponding TDD uplink-downlink configuration command includes:
acquiring, by the UE, identifiers of locations, in the physical downlink control signaling, of TDD uplink-downlink configuration commands separately corresponding to the serving cells of the UE according to the correspondence between an identifier of each serving cell of the serving cells of the UE and an identifier of the location, in the physical downlink control signaling, of the corresponding TDD uplink-downlink configuration command; and
acquiring, by the UE, the TDD uplink-downlink configurations separately corresponding to the serving cells of the UE from the at least one TDD uplink-downlink configuration command according to the identifiers of the locations, in the physical downlink control signaling, of the TDD uplink-downlink configuration commands separately corresponding to the serving cells of the UE.

With reference to the first aspect, or the first possible implementation manner of the first aspect, or the second possible implementation manner of the first aspect, or the third possible implementation manner of the first aspect, in a fourth possible implementation manner of the first aspect, the step of acquiring, by the UE, TDD uplink-downlink configurations separately corresponding to the serving cells of the UE from the at least one TDD uplink-downlink configuration command according to the correspondence between each serving cell of the serving cells of the UE and a location, in the physical downlink control signaling, of a corresponding TDD uplink-downlink configuration command includes:
acquiring, by the UE, a TDD uplink-downlink configuration corresponding to a primary serving cell of the UE from the at least one TDD uplink-downlink configuration according to an identifier, which is preset in a protocol, of a location, in the physical downlink control signaling, of a TDD uplink-downlink configuration command corresponding to the primary serving cell of the UE.

With reference to the first possible implementation manner of the first aspect, or the second possible implementation manner of the first aspect, or the third possible implementation manner of the first aspect, or the fourth possible implementation manner of the first aspect, in a fifth possible implementation manner of the first aspect, before the step of applying, by the UE, for the serving cells of the UE, the corresponding TDD uplink-downlink configurations, the method further includes:
determining, by the UE, whether the serving cells of the UE are active serving cells; and
the step of applying, by the UE, for the serving cells of the UE, the corresponding TDD uplink-downlink configurations includes:
   if the serving cells of the UE are active serving cells, applying, by the UE, for the active serving cells, the corresponding TDD uplink-downlink configurations; or
   if the serving cells of the UE are inactive serving cells, storing, by the UE, the TDD uplink-downlink configurations corresponding to the inactive serving cells.

With reference to the first possible implementation manner of the first aspect, or the second possible implementation manner of the first aspect, or the third possible implementation manner of the first aspect, or the fourth possible implementation manner of the first aspect, or the fifth possible implementation manner of the first aspect, in a sixth possible implementation manner of the first aspect, before the step of configuring, by the UE, for the serving cells of the UE, the corresponding TDD uplink-downlink configurations, the method further includes:
receiving, by the UE, an indication message sent by the network-side node, where the indication message is used to indicate whether a configuration function of a TDD uplink-downlink configuration is enabled for the UE; and
the step of applying, by the UE, for the serving cells of the UE, the corresponding TDD uplink-downlink configurations includes:
   if the indication message indicates that the configuration function of the TDD uplink-downlink configuration is enabled for the UE, applying, by the UE, for the serving cells of the UE, the corresponding TDD uplink-downlink configurations.

With reference to the first possible implementation manner of the first aspect, or the second possible implementation manner of the first aspect, or the third possible implementation manner of the first aspect, or the fourth possible implementation manner of the first aspect, or the fifth possible implementation manner of the first aspect, in a seventh possible implementation manner of the first aspect, before the step of applying, by the UE, for the serving cells of the UE, the corresponding TDD uplink-downlink configurations, the method further includes:
receiving, by the UE, an indication message sent by the network-side node, where the indication message is used to indicate whether a configuration function of a TDD uplink-downlink configuration is enabled for a serving cell; and
the step of applying, by the UE, for the serving cells of the UE, the corresponding TDD uplink-downlink configurations includes:
   if the indication message indicates that the configuration function of the TDD uplink-downlink configuration is enabled for the serving cell, applying, by the UE, for the serving cell of the UE, a corresponding TDD uplink-downlink configuration.

With reference to the first aspect, or the first possible implementation manner of the first aspect, or the second possible implementation manner of the first aspect, or the third possible implementation manner of the first aspect, or the fourth possible implementation manner of the first aspect, or the fifth possible implementation manner of the first aspect, or the sixth possible implementation manner of the first aspect, or the seventh possible implementation manner of the first aspect, in an eighth possible implementation manner of the first aspect, each TDD uplink-downlink configuration command of the at least one TDD uplink-downlink configuration command included in the physical downlink control signaling separately corresponds to at least one serving cell.

According to a second aspect, an embodiment of the present invention provides a TDD uplink-downlink configuration acquiring apparatus, including:
a receiving unit, configured to receive physical downlink control signaling sent by a network-side node, where the physical downlink control signaling includes at least one TDD uplink-downlink configuration command, and each TDD uplink-downlink configuration command of the at least one TDD uplink-downlink configuration command separately carries a corresponding TDD uplink-downlink configuration, where
the receiving unit is further configured to receive a configuration message sent by the network-side node, where the configuration message carries a correspondence between each serving cell of serving cells of the UE and a location, in the physical downlink control signaling, of a corresponding TDD uplink-downlink configuration command; and
an acquiring unit, configured to acquire TDD uplink-downlink configurations separately corresponding to the serving cells of the UE from the at least one TDD uplink-downlink configuration command according to the correspondence, which is received by the receiving unit, between each serving cell of the serving cells of the UE and a location, in the physical downlink control signaling, of a corresponding TDD uplink-downlink configuration command.

With reference to the second aspect, in a first possible implementation manner of the second aspect, the apparatus further includes: an application unit, where
the application unit is configured to apply, for the serving cells of the UE, the corresponding TDD uplink-downlink configurations acquired by the acquiring unit.

With reference to the second aspect or the first possible implementation manner of the second aspect, in a second possible implementation manner of the second aspect,
the configuration message received by the receiving unit carries a correspondence between an identifier of each serving cell of the serving cells of the UE and an identifier of the location, in the physical downlink control signaling, of the corresponding TDD uplink-downlink configuration command; and
the acquiring unit is specifically configured to acquire the TDD uplink-downlink configurations separately corresponding to the serving cells of the UE from the at least one TDD uplink-downlink configuration command according to the correspondence, which is received by the receiving unit, between an identifier of each serving cell of the serving cells of the UE and an identifier of the location, in the physical downlink control signaling, of the corresponding TDD uplink-downlink configuration command.

With reference to the second possible implementation manner of the second aspect, in a third possible implementation manner of the second aspect,
the acquiring unit is specifically configured to acquire identifiers of locations, in the physical downlink control signaling, of TDD uplink-downlink configuration commands separately corresponding to the serving cells of the UE according to the correspondence, which is received by the receiving unit, between an identifier of each serving cell of the serving cells of the UE and an identifier of the location, in the physical downlink control signaling, of the corresponding TDD uplink-downlink configuration command; and
the acquiring unit is specifically further configured to acquire the TDD uplink-downlink configurations separately corresponding to the serving cells of the UE from the at least one TDD uplink-downlink configuration command according to the identifiers of the locations, in the physical downlink control signaling, of the TDD uplink-downlink configuration commands separately corresponding to the serving cells of the UE.

With reference to the second aspect, or the first possible implementation manner of the second aspect, or the second possible implementation manner of the second aspect, or the third possible implementation manner of the second aspect, in a fourth possible implementation manner of the second aspect,
the acquiring unit is specifically configured to acquire a TDD uplink-downlink configuration corresponding to a primary serving cell of the UE from the at least one TDD uplink-downlink configuration according to an identifier, which is preset in a protocol, of a location, in the physical downlink control signaling, of a TDD uplink-downlink configuration command corresponding to the primary serving cell of the UE.

With reference to the first possible implementation manner of the second aspect, or the second possible implementation manner of the second aspect, or the third possible implementation manner of the second aspect, or the fourth possible implementation manner of the second aspect, in a fifth possible implementation manner of the second aspect, the apparatus further includes: a determining unit and a storage unit, where
the determining unit is configured to determine whether the serving cells of the UE are active serving cells;
the application unit is specifically configured to: when the determining unit determines that the serving cells of the UE are active serving cells, apply, for the active serving cells, the corresponding TDD uplink-downlink configurations; and
the storage unit is configured to: when the determining unit determines that the serving cells of the UE are inactive serving cells, store the TDD uplink-downlink configurations corresponding to the inactive serving cells.

With reference to the first possible implementation manner of the second aspect, or the second possible implementation manner of the second aspect, or the third possible implementation manner of the second aspect, or the fourth possible implementation manner of the second aspect, or the fifth possible implementation manner of the second aspect, in a sixth possible implementation manner of the second aspect,
the receiving unit is further configured to receive an indication message sent by the network-side node, where the indication message is used to indicate whether a configuration function of a TDD uplink-downlink configuration is enabled for the UE; and
the application unit is specifically configured to: when the indication message received by the receiving unit indicates that the configuration function of the TDD uplink-downlink configuration is enabled for the UE, apply, for the serving cells of the UE, the corresponding TDD uplink-downlink configurations.

With reference to the first possible implementation manner of the second aspect, or the second possible implementation manner of the second aspect, or the third possible implementation manner of the second aspect, or the fourth possible implementation manner of the second aspect, or the fifth possible implementation manner of the second aspect, in a seventh possible implementation manner of the second aspect,
the receiving unit is further configured to receive an indication message sent by the network-side node, where the indication message is used to indicate whether a configuration function of a TDD uplink-downlink configuration is enabled for a serving cell; and
the application unit is specifically configured to: when the indication message received by the receiving unit indicates that the configuration function of the TDD uplink-downlink configuration is enabled for the serving cell, apply, for the serving cell of the UE, a corresponding TDD uplink-downlink configuration.

With reference to the second aspect, or the first possible implementation manner of the second aspect, or the second possible implementation manner of the second aspect, or the third possible implementation manner of the second aspect, or the fourth possible implementation manner of the second aspect, or the fifth possible implementation manner of the second aspect, or the sixth possible implementation manner of the second aspect, or the seventh possible implementation manner of the second aspect, in an eighth possible implementation manner of the second aspect,
each TDD uplink-downlink configuration command of the at least one TDD uplink-downlink configuration command included in the physical downlink control signaling received by the receiving unit separately corresponds to at least one serving cell.

According to a third aspect, an embodiment of the present invention provides a TDD uplink-downlink configuration acquiring method, including:
constructing, by a network-side node, physical downlink control signaling according to a correspondence between each serving cell of serving cells of user equipment UE and a location, in the physical downlink control signaling, of a corresponding TDD uplink-downlink configuration command, where the physical downlink control signaling includes at least one TDD uplink-downlink configuration command, and each TDD uplink-downlink configuration command of the at least one TDD uplink-downlink configuration command separately carries a corresponding TDD uplink-downlink configuration;
sending, by the network-side node, the physical downlink control signaling to the UE; and
sending, by the network-side node, a configuration message to the UE, where the configuration message carries the correspondence between each serving cell of the serving cells of the UE and a location, in the physical downlink control signaling, of a corresponding TDD uplink-downlink configuration command.

With reference to the third aspect, in a first possible implementation manner of the third aspect, the configuration message carries a correspondence between an identifier of each serving cell of the serving cells of the UE and an identifier of the location, in the physical downlink control signaling, of the corresponding TDD uplink-downlink configuration command.

With reference to the third aspect or the first possible implementation manner of the third aspect, in a second possible implementation manner of the third aspect, after the step of sending, by the network-side node, a configuration message to the UE, the method further includes:
sending, by the network-side node, an indication message to the UE, where the indication message is used to indicate whether a configuration function of a TDD uplink-downlink configuration is enabled for the UE.

With reference to the third aspect or the first possible implementation manner of the third aspect, in a third possible implementation manner of the third aspect, after the step of sending, by the network-side node, a configuration message to the UE, the method further includes:
sending, by the network-side node, an indication message to the UE, where the indication message is used to indicate whether a configuration function of a TDD uplink-downlink configuration is enabled for a serving cell.

With reference to the third aspect, or the first possible implementation manner of the third aspect, or the second possible implementation manner of the third aspect, or the third possible implementation manner of the third aspect, in a fourth possible implementation manner of the third aspect, each TDD uplink-downlink configuration command of the at least one TDD uplink-downlink configuration command included in the physical downlink control signaling separately corresponds to at least one serving cell.

According to a fourth aspect, an embodiment of the present invention provides a TDD uplink-downlink configuration acquiring apparatus, including:
a construction unit, configured to construct physical downlink control signaling according to a correspondence between each serving cell of serving cells of user equipment UE and a location, in the physical downlink control signaling, of a corresponding TDD uplink-downlink configuration command, where the physical downlink control signaling includes at least one TDD uplink-downlink configuration command, and each TDD uplink-downlink configuration command of the at least one TDD uplink-downlink configuration command separately carries a corresponding TDD uplink-downlink configuration; and
a sending unit, configured to send the physical downlink control signaling constructed by the construction unit to the UE, where
the sending unit is further configured to send a configuration message to the UE, where the configuration message carries the correspondence between each serving cell of the serving cells of the UE and a location, in the physical downlink control signaling, of a corresponding TDD uplink-downlink configuration command.

With reference to the fourth aspect, in a first possible implementation manner of the fourth aspect,
the configuration message sent by the sending unit carries a correspondence between an identifier of each serving cell of the serving cells of the UE and an identifier of the location, in the physical downlink control signaling, of the corresponding TDD uplink-downlink configuration command.

With reference to the fourth aspect or the first possible implementation manner of the fourth aspect, in a second possible implementation manner of the fourth aspect,
the sending unit is further configured to send an indication message to the UE, where the indication message is used to indicate whether a configuration function of a TDD uplink-downlink configuration is enabled for the UE.

With reference to the fourth aspect or the first possible implementation manner of the fourth aspect, in a third possible implementation manner of the fourth aspect,
the sending unit is further configured to send an indication message to the UE, where the indication message is used to indicate whether a configuration function of a TDD uplink-downlink configuration is enabled for a serving cell.

With reference to the fourth aspect, or the first possible implementation manner of the fourth aspect, or the second possible implementation manner of the fourth aspect, or the third possible implementation manner of the fourth aspect, in a fourth possible implementation manner of the fourth aspect,
each TDD uplink-downlink configuration command of the at least one TDD uplink-downlink configuration command included in the physical downlink control signaling constructed by the construction unit separately corresponds to at least one serving cell.

According to the TDD uplink-downlink configuration acquiring method and apparatus that are provided in the embodiments of the present invention, first a network-side node sends physical downlink control signaling and a configuration message to user equipment, and then the user equipment acquires TDD uplink-downlink configurations separately corresponding to serving cells from at least one TDD uplink-downlink configuration command according to a correspondence between each serving cell of the serving cells of the UE and a location, in the physical downlink control signaling, of a corresponding TDD uplink-downlink configuration command. Compared with that currently physical downlink control signaling carries only one TDD uplink-downlink configuration command, in the embodiments of the present invention, physical downlink control carries multiple TDD uplink-downlink configuration commands, and a correspondence between cells and locations, in physical downlink control signaling, of the TDD uplink-downlink configuration commands is established, so that a quantity of times that a terminal device receives the physical downlink control signaling can be reduced, and therefore system signaling overheads can be reduced.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a TDD uplink-downlink configuration acquiring method according to an embodiment of the present invention;
FIG. 2 is a schematic structural diagram of a TDD uplink-downlink configuration acquiring apparatus according to an embodiment of the present invention;
FIG. 3 is a schematic structural diagram of user equipment according to an embodiment of the present invention;
FIG. 4 is a schematic diagram of physical downlink control signaling according to an embodiment of the present invention;
FIG. 5 is a flowchart of another TDD uplink-downlink configuration acquiring method according to an embodiment of the present invention;
FIG. 6 is a schematic structural diagram of another TDD uplink-downlink configuration acquiring apparatus according to an embodiment of the present invention;
FIG. 7 is a schematic structural diagram of another user equipment according to an embodiment of the present invention;
FIG. 8 is a schematic diagram of a correspondence between a serving cell and a location according to an embodiment of the present invention;
FIG. 9 is a schematic diagram of a correspondence between a serving cell and a location according to an embodiment of the present invention;
FIG. 10 is a schematic diagram of a correspondence between a serving cell and a location according to an embodiment of the present invention;
FIG. 11 is a schematic diagram of a correspondence between UE, a serving cell, and a location according to an embodiment of the present invention;
FIG. 12 is a schematic diagram of a correspondence between a serving cell and a location according to an embodiment of the present invention;
FIG. 13 is a schematic diagram of a correspondence between UE, a serving cell, and a location according to an embodiment of the present invention;
FIG. 14 is a flowchart of still another TDD uplink-downlink configuration acquiring method according to an embodiment of the present invention;
FIG. 15 is a schematic structural diagram of still another TDD uplink-downlink configuration acquiring apparatus according to an embodiment of the present invention;
FIG. 16 is a schematic structural diagram of still another network-side node according to an embodiment of the present invention;
FIG. 17 is a flowchart of yet another TDD uplink-downlink configuration acquiring method according to an embodiment of the present invention;
FIG. 18 is a schematic structural diagram of yet another TDD uplink-downlink configuration acquiring apparatus according to an embodiment of the present invention; and
FIG. 19 is a schematic structural diagram of yet another network-side node according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

To make the advantages of the technical solutions of the present invention clearer, the following describes the present invention in detail with reference to the accompanying drawings and embodiments.

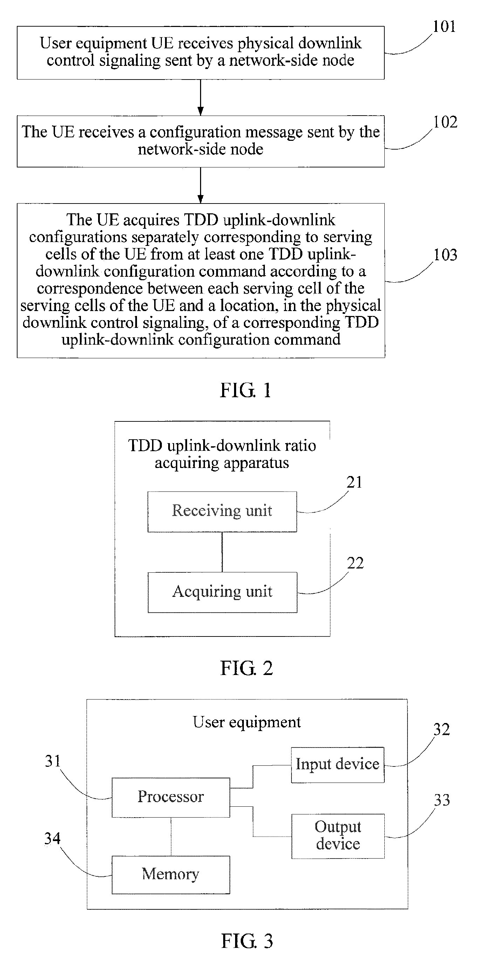

An embodiment of the present invention provides a TDD uplink-downlink configuration acquiring method, and as shown in FIG. 1, the method includes:
101. User equipment UE receives physical downlink control signaling sent by a network-side node.

The physical downlink control signaling includes at least one TDD uplink-downlink configuration command, where each TDD uplink-downlink configuration command of the at least one TDD uplink-downlink configuration command separately carries a corresponding TDD uplink-downlink configuration. In this embodiment of the present invention, a TDD radio frame supports seven different TDD uplink-downlink configurations, specifically as shown in the following table:

| TDD uplink-downlink configuration sequence number | Conversion interval | Subframe sequence number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 5 ms | D | S | U | U | U | D | D | D | D | D |
| 4 | 5 ms | D | S | U | U | D | D | D | D | D | D |
| 5 | 5 ms | D | S | U | D | D | D | D | D | D | D |
| 6 | 5 ms | D | S | U | U | U | D | S | U | U | D |

Optionally, step 101 may be: The UE receives, according to a preset cycle, the physical downlink control signaling sent by the network-side node. The preset cycle may be configured by the network-side node in advance, for example, the preset cycle may be 10 milliseconds, 20 milliseconds, 40 milliseconds, or the like. In this embodiment of the present invention, the UE receives, according to the preset cycle, the physical downlink control signaling sent by the network-side node, which can make the UE apply in real time, for serving cells, corresponding TDD uplink-downlink configurations, and therefore can implement that the serving cells of the UE can better adapt to variation of different traffic volumes.

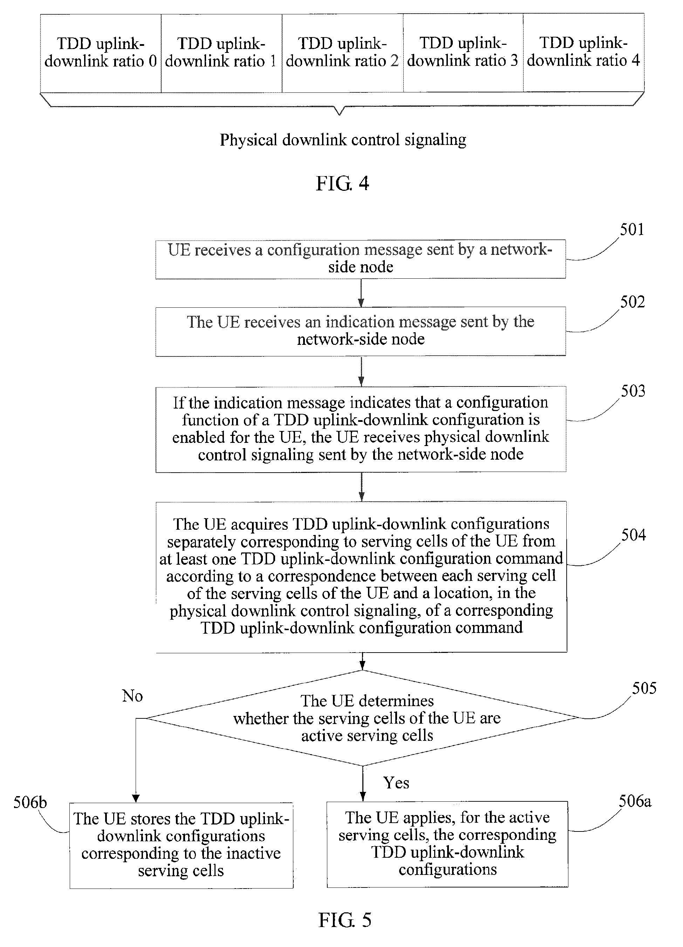

For this embodiment of the present invention, physical downlink physical signaling carries multiple TDD uplink-downlink configuration commands, so that a quantity of times that the network-side node sends the physical downlink control signaling can be reduced, and therefore system signaling overheads can be reduced. For example, as shown in FIG. 4, one piece of physical downlink control signaling includes five TDD uplink-downlink configuration commands.

102. The UE receives a configuration message sent by the network-side node.

The configuration message carries a correspondence between each serving cell of serving cells of the UE and a location, in the physical downlink control signaling, of a corresponding TDD uplink-downlink configuration command. In this embodiment of the present invention, the correspondence between each serving cell of the serving cells of the UE and a location, in the physical downlink control signaling, of a corresponding TDD uplink-downlink configuration command is used to instruct the UE to acquire, for the serving cells, corresponding TDD uplink-downlink configurations from the received physical downlink control signaling.

For this embodiment of the present invention, the configuration message may be a system broadcast message or a dedicated RRC (Radio Resource Control, radio resource control) message, or may be a newly designed message, or an IE (Information Element, information element) newly added to an existing message, which is not limited in this embodiment of the present invention.

For this embodiment of the present invention, by means of the correspondence between each serving cell of the serving cells of the UE and a location, in the physical downlink control signaling, of a corresponding TDD uplink-downlink configuration command, it can be implemented that the UE correctly applies, for the serving cells, corresponding TDD uplink-downlink configurations separately.

103. The UE acquires TDD uplink-downlink configurations separately corresponding to serving cells of the UE from at least one TDD uplink-downlink configuration command according to a correspondence between each serving cell of the serving cells of the UE and a location, in the physical downlink control signaling, of a corresponding TDD uplink-downlink configuration command.

For this embodiment of the present invention, an uplink resource configured for the UE by the network-side node includes: an uplink SR (schedule request, scheduling request) resource, CQI (channel quality indicator, channel quality indicator) report resource, CSI (Channel Status Information, channel state information) resource, SRS (sounding reference signal, sounding reference signal) resource, PRACH (Physical Random Access Channel, physical random access channel) resource, and the like. Specifically, the UE may report an uplink resource such as the SR resource, the CQI report resource, the CSI resource, the PRACH resource, or the SRS resource according to a preset cycle. For example, the preset cycle may be 1 millisecond, 5 milliseconds, 10 milliseconds, 20 milliseconds, or the like. In this embodiment of the present invention, a location, in a TDD uplink-downlink configuration, of a resource may be determined by using a cycle and an offset that correspond to the resource. For example, a radio frame is sent by using 10 milliseconds as a cycle; if a cycle of the SR resource is 10 milliseconds, and an offset of the SR resource is 2 milliseconds, it indicates that the SR resource is configured, for the UE, in a subframe 2 of each radio frame, that is, the UE may send, in the subframe 2 of each radio frame, an SR by using the SR resource. For another example, a radio frame is sent by using 10 milliseconds as a cycle; if a cycle of the SR resource is 20 milliseconds, and an offset of the SR resource is 3 milliseconds, it indicates that the SR resource is configured, for the UE, in a subframe 3 of an even radio frame, that is, the UE may send, in the subframe 3 of the even radio frame, an SR by using the SR resource. The subframe 3 of the even radio frame includes: a subframe 3 of a radio frame 0, a subframe 3 of a radio frame 2, a subframe 3 of a radio frame 4, or the like.

For this embodiment of the present invention, a TDD uplink-downlink configuration can be dynamically changed; therefore there is a case in which a subframe is indicated, in some radio frames, as an uplink subframe and is indicated, in some radio frames, as a downlink subframe. In this case, there is a case in which a location of an uplink resource configured for the UE conflicts with a subframe direction, and when the UE sends a signal on the uplink resource, and the subframe direction of the resource is downlink, the signal sent by the UE interferes with another UE; in addition, in this case, the signal sent by the UE is an unwanted signal, and therefore a waste of transmit power of the UE is caused.

Optionally, an embodiment of the present invention provides an uplink resource configuration method, specifically including: an uplink resource configured for UE by a network-side node is in an uplink subframe and/or a special subframe in a downlink reference configuration of the UE. The UE may dynamically change a TDD uplink-downlink configuration in a manner provided in this embodiment of the present invention.

When the UE corresponds to only one serving cell, a downlink reference configuration, in the serving cell, of the UE is the downlink reference configuration of the UE. When the UE corresponds to multiple serving cells, a downlink reference configuration, in a primary serving cell or a serving cell for which the uplink resource has been configured, of the UE is the downlink reference configuration of the UE.

For example, as shown in the following table, if a TDD uplink-downlink configuration that is configured for UE can be dynamically changed in a TDD dynamic configuration set {TDD uplink-downlink configuration 0, TDD uplink-downlink configuration 1}, and a downlink reference configuration of the UE is a TDD uplink-downlink configuration 2, according to the method provided in this embodiment of the present invention, the uplink resource can be configured only for an uplink subframe 2, an uplink subframe 7, a special subframe 1, and a special subframe 6.

| TDD uplink-downlink configuration sequence number | Conversion interval | Subframe sequence number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |

The TDD dynamic configuration set may be a set of existing seven TDD uplink-downlink configurations, or may be a set of new TDD uplink-downlink configurations, which is not limited in this embodiment of the present invention. In this embodiment of the present invention, the TDD dynamic configuration set may be a set of TDD uplink-downlink configurations that are fixed or configured, or may be a set of TDD uplink-downlink configurations that are used within a period of time by the UE.

For this embodiment of the present invention, a downlink reference configuration of UE is a configuration, of TDD uplink-downlink configurations, in which quantities of uplink subframes and special subframes of the UE are the smallest, and the uplink subframes and the special subframes in this configuration cannot be dynamically configured as downlink subframes, and therefore the uplink resource is configured in an uplink subframe or a special subframe in the downlink reference configuration of the UE, which can avoid mutual interference between UEs that is caused by a change in a subframe direction.

Alternatively, an embodiment of the present invention provides another uplink resource configuration method, specifically including: an uplink resource configured for UE by a network-side node is in an uplink subframe and/or a special subframe corresponding to a TDD uplink-downlink configuration, in a TDD dynamic configuration set of the UE, in which quantities of uplink subframes and special subframes are the smallest.

For example, if a TDD uplink-downlink configuration that is configured for UE can be dynamically changed in a TDD dynamic configuration set {TDD uplink-downlink configuration 0, TDD uplink-downlink configuration 1}, where quantities of uplink subframes and special subframes in a TDD downlink configuration 1 are the smallest, according to the method provided in this embodiment of the present invention, the uplink resource may be configured in an uplink subframe 2, an uplink subframe 3, an uplink subframe 7, an uplink subframe 8, a special subframe 1, and a special subframe 6.

For this embodiment of the present invention, in the TDD uplink-downlink configuration, in the TDD dynamic configuration set of the UE, in which a quantity of uplink subframes or special subframes is the smallest, the uplink subframes and the special subframes cannot be dynamically configured as downlink subframes, and therefore the uplink resource is configured in an uplink subframe and/or a special subframe in the downlink reference configuration of the UE, which can avoid mutual interference between UEs that is caused by a change in a subframe direction, and additionally can increase a quantity of subframes in which the uplink resource can be configured.

Further, an embodiment of the present invention provides still another uplink resource configuration method, specifically including: a subframe location of the uplink resource configured for UE by a network-side node needs to be an uplink subframe and/or a special subframe, and a direction of another subframe location in which the uplink resource is not configured may be changed into downlink.

Alternatively, a subframe location of the uplink resource configured for UE by a network-side node is limited to a subframe location in which physical downlink control signaling indicates that the subframe is an uplink subframe or a special subframe.

For example, if a TDD uplink-downlink configuration that is configured for UE can be dynamically changed in a TDD dynamic configuration set {TDD uplink-downlink configuration 0, TDD uplink-downlink configuration 1}, a cycle of an uplink resource SR resource is 20 milliseconds, and an offset of the SR resource is 9 milliseconds, the SR resource is configured in a subframe 9 of an even radio frame, that is, a direction of the subframe 9 of the even radio frame cannot be changed into downlink; in addition, the SR resource is not configured in a subframe 9 of an odd radio frame, that is, a direction of the subframe 9 of the odd radio frame may still be changed into downlink. According to the method provided in this embodiment of the present invention, a subframe in which the uplink resource can be configured may include: an uplink subframe 2, an uplink subframe 3, an uplink subframe 7, an uplink subframe 8, the subframe 9 of the even radio frame, a special subframe 1, and a special subframe 6.

For this embodiment of the present invention, the uplink resource needs to be configured in an uplink subframe or a special subframe in the downlink reference configuration of the UE, which can avoid mutual interference between UEs that is caused by a change in a subframe direction, and additionally can configure the uplink resource by using the uplink subframe and/or the special subframe to the greatest extent.

For this embodiment of the present invention, in a scenario of cross-station carrier aggregation, network-side nodes may separately apply, for serving cells, corresponding TDD uplink-downlink configurations according to the method provided in this embodiment of the present invention; in addition, the network-side nodes may also separately apply, for the serving cells, the corresponding TDD uplink-downlink configurations in a manner of interaction.

Specifically, in the scenario of cross-station carrier aggregation, a micro base station may send, by using an Xn interface, information such as a correspondence between serving cells and TDD uplink-downlink configurations and configuration parameters of the TDD uplink-downlink configurations to a macro base station, so that the macro base station can apply, for micro base stations, corresponding TDD uplink-downlink configurations according to a traffic volume of communication between the micro base stations and UEs. In addition, a macro base station may also apply, for a micro base station, information such as a correspondence between serving cells and TDD uplink-downlink configurations and configuration parameters of the TDD uplink-downlink configurations according to a traffic volume, a load status, and the like of the macro base station, so that the TDD uplink-downlink configurations corresponding to the serving cells can be applied in real time for micro base stations.

Further, as a specific implementation of the method shown in FIG. 1, an embodiment of the present invention provides a TDD uplink-downlink configuration acquiring apparatus, and as shown in FIG. 2, an entity of the apparatus may be user equipment, such as a mobile phone. The apparatus includes: a receiving unit 21 and an acquiring unit 22.

The receiving unit 21 is configured to receive physical downlink control signaling sent by a network-side node.

The physical downlink control signaling includes at least one TDD uplink-downlink configuration command, where each TDD uplink-downlink configuration command of the at least one TDD uplink-downlink configuration command separately carries a corresponding TDD uplink-downlink configuration.

The receiving unit 21 is further configured to receive a configuration message sent by the network-side node.

The configuration message carries a correspondence between each serving cell of serving cells of the UE and a location, in the physical downlink control signaling, of a corresponding TDD uplink-downlink configuration command.

The acquiring unit 22 is configured to acquire TDD uplink-downlink configurations separately corresponding to the serving cells of the UE from the at least one TDD uplink-downlink configuration command according to the correspondence, which is received by the receiving unit 21, between each serving cell of the serving cells of the UE and a location, in the physical downlink control signaling, of a corresponding TDD uplink-downlink configuration command.

It should be noted that, for another corresponding description corresponding to functional units in the TDD uplink-downlink configuration acquiring apparatus that is provided in this embodiment of the present invention, reference may be made to the corresponding description in FIG. 1, and details are not described herein again.

Still further, the entity of the TDD uplink-downlink configuration acquiring apparatus may be user equipment. As shown in FIG. 3, the user equipment may include: a processor 31, an input device 32, an output device 33, and a memory 34, where the input device 32, the output device 33, and the memory 34 are separately connected to the processor 31.

The processor 31 is configured to receive physical downlink control signaling sent by a network-side node.

The physical downlink control signaling includes at least one TDD uplink-downlink configuration command, where each TDD uplink-downlink configuration command of the at least one TDD uplink-downlink configuration command separately carries a corresponding TDD uplink-downlink configuration.

The processor 31 is further configured to receive a configuration message sent by the network-side node.

The configuration message carries a correspondence between each serving cell of serving cells of the UE and a location, in the physical downlink control signaling, of a corresponding TDD uplink-downlink configuration command.

The processor 31 is further configured to acquire TDD uplink-downlink configurations separately corresponding to the serving cells of the UE from the at least one TDD uplink-downlink configuration command according to the correspondence between each serving cell of the serving cells of the UE and a location, in the physical downlink control signaling, of a corresponding TDD uplink-downlink configuration command.

It should be noted that, for another corresponding description corresponding to devices in the user equipment that is provided in this embodiment of the present invention, reference may be made to the corresponding description in FIG. 1, and details are not described herein again.

According to the TDD uplink-downlink configuration acquiring method and apparatus that are provided in the embodiments of the present invention, first a network-side node sends physical downlink control signaling and a configuration message to user equipment, and then the user equipment acquires TDD uplink-downlink configurations separately corresponding to serving cells from at least one TDD uplink-downlink configuration command according to a correspondence between each serving cell of the serving cells of the UE and a location, in the physical downlink control signaling, of a corresponding TDD uplink-downlink configuration command. Compared with that currently physical downlink control signaling carries only one TDD uplink-downlink configuration command, in the embodiments of the present invention, physical downlink control carries multiple TDD uplink-downlink configuration commands, and a correspondence between cells and locations, in physical downlink control signaling, of the TDD uplink-downlink configuration commands is established, so that a quantity of times that a terminal device receives the physical downlink control signaling can be reduced, and therefore system signaling overheads can be reduced.

An embodiment of the present invention provides another TDD uplink-downlink configuration acquiring method, and as shown in FIG. 5, the method includes:
501. UE receives a configuration message sent by a network-side node.

The configuration message carries a correspondence between each serving cell of serving cells of the UE and a location, in physical downlink control signaling, of a corresponding TDD uplink-downlink configuration command. The network-side node sends the configuration message to the UE, where the configuration message carries the correspondence between each serving cell of the serving cells of the UE and a location, in the physical downlink control signaling, of a corresponding TDD uplink-downlink configuration command.

For this embodiment of the present invention, the configuration message may be a system broadcast message or a dedicated RRC (Radio Resource Control, radio resource control) message, or may be a newly designed message, or an IE (Information Element, information element) newly added to an existing message, which is not limited in this embodiment of the present invention.

For this embodiment of the present invention, by means of the correspondence between each serving cell of the serving cells of the UE and a location, in the physical downlink control signaling, of a corresponding TDD uplink-downlink configuration command, it can be implemented that the UE correctly applies, for the serving cells, corresponding TDD uplink-downlink configurations separately.

Optionally, the configuration message may further carry a correspondence between an identifier of each serving cell of the serving cells of the UE and an identifier of the location, in the physical downlink control signaling, of the corresponding TDD uplink-downlink configuration command. The identifier of the location, in the physical downlink control signaling, of the TDD uplink-downlink configuration command is used to indicate locations, separately in the physical downlink control signaling, of TDD uplink-downlink configuration commands.

502. The UE receives an indication message sent by the network-side node.

The indication message may be used to indicate whether a configuration function of a TDD uplink-downlink configuration is enabled for the UE. For example, the indication message may be enabled or disabled.

For this embodiment of the present invention, a new IE may be designed and used as an indication message. For example, a Boolean variable is designed and used as an indication message; if a value of the Boolean variable is true, it indicates that a configuration function of a TDD uplink-downlink configuration is enabled for UE; or if a value of the Boolean variable is false, it indicates that a configuration function of a TDD uplink-downlink configuration is disabled for UE. In this embodiment of the present invention, a new RRC (Radio Resource Control, radio resource control) message may be also designed and used as an indication message.

Preferably, an acquiring parameter of a TDD uplink-downlink configuration may be used to implicitly indicate whether a configuration function of a TDD uplink-downlink configuration is enabled for UE. In this embodiment of the present invention, whether a configuration function of a TDD uplink-downlink configuration is enabled for UE is implicitly indicated, so that a quantity of times that a network-side node sends an indication message can be reduced, and therefore system signaling overheads can be further reduced.

The acquiring parameter of the TDD uplink-downlink configuration may be: a radio network temporary identifier, a sending cycle of physical downlink control signaling that carries TDD uplink-downlink configuration commands, reference for configuring TDD uplink ratios, reference for configuring TDD downlink ratios, identifiers of locations, in physical downlink control signaling, of TDD uplink-downlink configuration commands, a correspondence between each serving cell of serving cells of UE and a location, in physical downlink control signaling, of a corresponding TDD uplink-downlink configuration command, or the like. The radio network temporary identifier is used to mask physical downlink control signaling that carries TDD uplink-downlink configuration commands. If an acquiring parameter of a TDD uplink-downlink configuration is configured in advance, it indicates that a configuration function of a TDD uplink-downlink configuration is enabled for UE; or if an acquiring parameter of a TDD uplink-downlink configuration is not configured in advance, it indicates that a configuration function of a TDD uplink-downlink configuration is disabled for UE.

Optionally, the indication message may be further used to indicate whether a configuration function of a TDD uplink-downlink configuration is enabled for a serving cell. For example, the indication message may be enabled or disabled.

For this embodiment of the present invention, a new IE may be designed and used as an indication message. For example, a Boolean variable is designed and used as an indication message; if a value of the Boolean variable is true, it indicates that a configuration function of a TDD uplink-downlink configuration is enabled for the serving cell; or if a value of the Boolean variable is false, it indicates that a configuration function of a TDD uplink-downlink configuration is disabled for the serving cell. In this embodiment of the present invention, a new RRC (Radio Resource Control, radio resource control) message may be also designed and used as an indication message.

Preferably, an acquiring parameter of a TDD uplink-downlink configuration may be used to implicitly indicate whether a configuration function of a TDD uplink-downlink configuration is enabled for a serving cell. In this embodiment of the present invention, whether a configuration function of a TDD uplink-downlink configuration is enabled for a serving cell is implicitly indicated, so that a quantity of times that a network-side node sends an indication message can be reduced, and therefore system signaling overheads can be further reduced.

The acquiring parameter of the TDD uplink-downlink configuration may be: a radio network temporary identifier, a sending cycle of physical downlink control signaling that carries TDD uplink-downlink configuration commands, reference for configuring TDD uplink ratios, reference for configuring TDD downlink ratios, identifiers of locations, in physical downlink control signaling, of TDD uplink-downlink configuration commands, a correspondence between each serving cell of serving cells of UE and a location, in physical downlink control signaling, of a corresponding TDD uplink-downlink configuration command, or the like. The radio network temporary identifier is used to mask physical downlink control signaling that carries TDD uplink-downlink configuration commands. If an acquiring parameter of a TDD uplink-downlink configuration is configured in advance, it indicates that a configuration function of a TDD uplink-downlink configuration is enabled for a serving cell; or if an acquiring parameter of a TDD uplink-downlink configuration is not configured in advance, it indicates that a configuration function of a TDD uplink-downlink configuration is disabled for a serving cell.

Specifically, the indication message may indicate to UE whether a configuration function of a TDD uplink-downlink configuration is enabled for one serving cell, or may indicate to UE whether a configuration function of a TDD uplink-downlink configuration is enabled for multiple serving cells.

For this embodiment of the present invention, step 501 is an optional step. In this embodiment of the present invention, a sequence in which step 501 and step 502 are performed may be inversed, or step 501 and step 502 may be performed simultaneously or be performed as one step.

503. If the indication message indicates that a configuration function of a TDD uplink-downlink configuration is enabled for the UE, the UE receives physical downlink control signaling sent by the network-side node.

Optionally, step 503 may further be: If the indication message indicates that a configuration function of a TDD uplink-downlink configuration is enabled for a serving cell, the UE receives physical downlink control signaling sent by the network-side node.

The physical downlink control signaling includes TDD uplink-downlink configuration commands, where the TDD uplink-downlink configuration commands separately carry TDD uplink-downlink configurations.

For this embodiment of the present invention, each TDD uplink-downlink configuration command included in the physical downlink control signaling separately corresponds to at least one serving cell. In this embodiment of the present invention, each TDD uplink-downlink configuration command in the physical control signaling may correspond to one serving cell, or may correspond to one group of serving cells, which is not limited in this embodiment of the present invention. One group of serving cells that correspond to a TDD uplink-downlink configuration command may be multiple serving cells in a same band (Band), or may be multiple serving cells in different bands.

Optionally, step 503 may further be: If the indication message indicates that a configuration function of a TDD uplink-downlink configuration is enabled for the UE, the UE receives, according to a preset cycle, physical downlink control signaling sent by the network-side node. The preset cycle may be configured by the network-side node in advance, for example, the preset cycle may be 10 milliseconds, 20 milliseconds, 40 milliseconds, or the like. In this embodiment of the present invention, the UE receives, according to the preset cycle, the physical downlink control signaling sent by the network-side node, which can make the UE apply in real time, for serving cells, corresponding TDD uplink-downlink configurations, and therefore can implement that the serving cells of the UE can adapt to variation of different traffic volumes.

For this embodiment of the present invention, physical downlink physical signaling carries multiple TDD uplink-downlink configuration commands, so that a quantity of times that the network-side node sends the physical downlink control signaling can be reduced, and therefore system signaling overheads can be reduced.

504. The UE acquires TDD uplink-downlink configurations separately corresponding to serving cells of the UE from at least one TDD uplink-downlink configuration command according to a correspondence between each serving cell of the serving cells of the UE and a location, in the physical downlink control signaling, of a corresponding TDD uplink-downlink configuration command.

Optionally, step 504 may include: acquiring, by the UE, identifiers of locations, in the physical downlink control signaling, of TDD uplink-downlink configuration commands separately corresponding to the serving cells of the UE according to the correspondence between an identifier of each serving cell of the serving cells of the UE and an identifier of the location, in the physical downlink control signaling, of the corresponding TDD uplink-downlink configuration command. The identifiers of the locations, in the physical downlink control signaling, of the TDD uplink-downlink configuration commands may be index numbers of the locations of the TDD uplink-downlink configuration commands. For example, the index numbers of the locations of the TDD uplink-downlink configuration commands may be: location 0, location 1, location 2, and the like.

Optionally, in a configuration message received by UE, a correspondence between each serving cell of serving cells of the UE and a location, in physical downlink control signaling, of a corresponding TDD uplink-downlink configuration command may be specifically a correspondence between index numbers M of cells and index numbers N of locations of TDD uplink-downlink configuration commands, and may be specifically shown in the following table:

| Index number M of a cell | Index number N of a location of a TDD uplink-downlink configuration command |
|---|---|
| Cell 0 | Location 0 |
| Cell 1 | Location 1 |
| Cell 2 | Location 2 |
| Cell 3 | Location 4 |

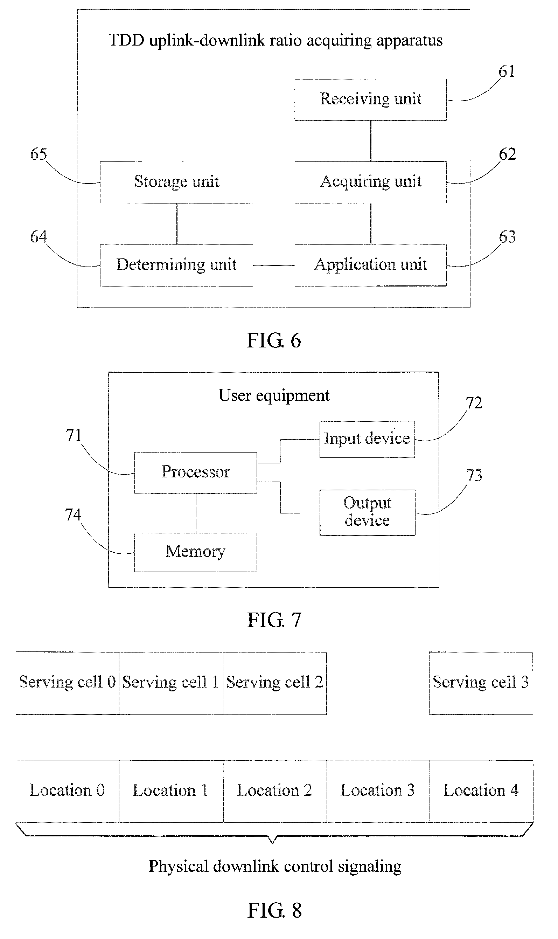

Both the index number M of a cell and the index number N of a location of a TDD uplink-downlink configuration command are integers greater than or equal to 0. In this case, a correspondence between serving cells of UE and TDD uplink-downlink configurations is shown in FIG. 8.

Optionally, when TDD uplink-downlink configurations in physical downlink control signaling correspond to one group of cells, a correspondence between index numbers M of serving cells and index numbers N of locations of TDD uplink-downlink configuration commands may be specifically shown in the following table:

| Index number M of a serving cell | Index number N of a location of a TDD uplink-downlink configuration command |
|---|---|
| Cell 0 | Location 0 |
| Cell 1 | Location 0 |
| Cell 2 | Location 0 |
| Cell 3 | Location 2 |

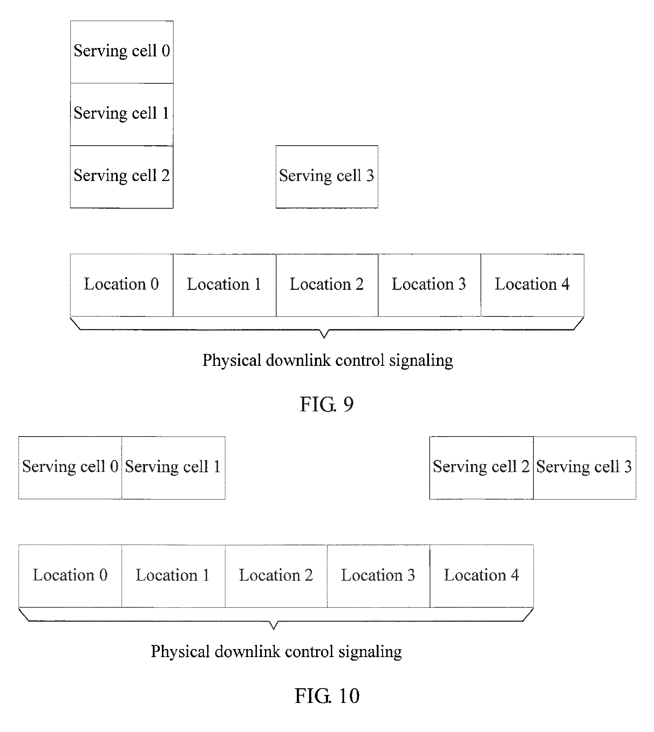

Both the index number M of a serving cell and the index number N of a location of a TDD uplink-downlink configuration command are integers greater than or equal to 0. In this case, a correspondence between serving cells of UE and TDD uplink-downlink configurations is shown in FIG. 9, a TDD uplink-downlink configuration command whose location index number is location 0 corresponds to one group of cells: cell 0, cell 1, and cell 2.

For this embodiment of the present invention, a serving cell without a corresponding TDD uplink-downlink configuration command may exist in the serving cells of the UE. In this case, the correspondence between index numbers M of serving cells and index numbers N of locations of TDD uplink-downlink configuration commands may be specifically shown in the following table:

| Index number M of a serving cell | Index number N of a location of a TDD uplink-downlink configuration command |
|---|---|
| Cell 0 | Location 0 |
| Cell 1 | Location 1 |
| Cell 2 | Location 4 |
| Cell 3 | |

Both the index number M of a serving cell and the index number N of a location of a TDD uplink-downlink configuration command are integers greater than or equal to 0. In this case, a correspondence between serving cells of UE and TDD uplink-downlink configurations is shown in FIG. 10, where no TDD uplink-downlink configuration corresponds to a serving cell 3 of the UE.

Preferably, step 501 may further be: UEs separately receive a same configuration message sent by a network-side node; step 503 may further be: If the indication message indicates that a configuration function of a TDD uplink-downlink configuration is enabled for the UEs, the UEs separately receive same physical downlink control signaling sent by the network-side node. In this case, the UEs separately acquire identifiers of locations of TDD uplink-downlink configuration commands separately corresponding to serving cells of the UEs according to a correspondence between identifiers of serving cells and identifiers of locations of TDD uplink-downlink configuration commands, and identifiers of the serving cells of the UEs. In this embodiment of the present invention, multiple UEs separately receive a configuration message and physical downlink control signaling that are sent by a network-side node, so that a quantity of times that the network-side node sends physical downlink control signaling and a configuration message can be reduced, and therefore system signaling overheads can be further reduced.

Optionally, step 501 may be: UE receives a configuration message sent by a network-side node; step 503 may further be: If the indication message indicates that a configuration function of a TDD uplink-downlink configuration is enabled for UEs, the UEs separately receive same physical downlink control signaling sent by the network-side node. In this case, the UEs separately acquire identifiers of locations of TDD uplink-downlink configuration commands separately corresponding to serving cells of the UEs according to a correspondence between identifiers of serving cells and identifiers of locations of TDD uplink-downlink configuration commands, and identifiers of the serving cells of the UEs.

Further optionally, step 501 may be: UEs separately receive a same configuration message sent by a network-side node; step 503 may further be: If the indication message indicates that a configuration function of a TDD uplink-downlink configuration is enabled for the UEs, the UEs receive physical downlink control signaling sent by the network-side node. In this case, the UEs separately acquire identifiers of locations of TDD uplink-downlink configuration commands separately corresponding to serving cells of the UEs according to a correspondence between identifiers of serving cells and identifiers of locations of TDD uplink-downlink configuration commands, and identifiers of the serving cells of the UEs.

For this embodiment of the present invention, in a configuration message received by UEs, a correspondence between each serving cell of serving cells of the UEs and a location, in physical downlink control signaling, of a corresponding TDD uplink-downlink configuration command may be specifically a correspondence between index numbers R of the UEs, index numbers M of serving cells, and index numbers N of locations of TDD uplink-downlink configuration commands, and may be specifically shown in the following table:

| Index number R of UE | Index number M of a serving cell | Index number N of a location of a TDD uplink-downlink configuration command |
|---|---|---|
| UE0 | Cell 0 | Location 0 |
| | Cell 1 | Location 1 |
| | Cell 2 | Location 2 |
| | Cell 3 | Location 4 |
| UE 1 | Cell 0 | Location 0 |
| | Cell 1 | Location 3 |
| UE 2 | Cell 0 | Location 0 |
| | Cell 1 | Location 2 |
| | Cell 2 | Location 4 |

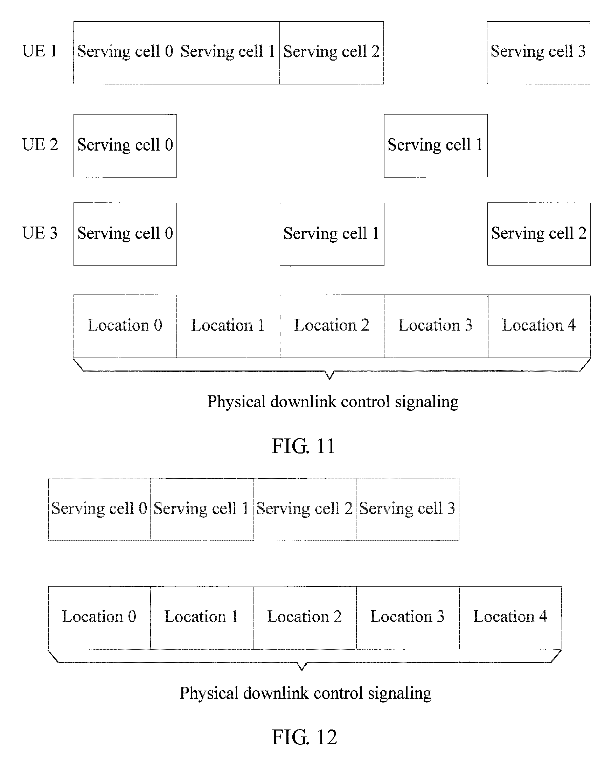

The index number R of UE, the index number M of a serving cell, and the index number N of a location of a TDD uplink-downlink configuration command are all integers greater than or equal to 0. In this case, a correspondence between serving cells of UEs and TDD uplink-downlink configuration commands is shown in FIG. 11.

Optionally, in a configuration message received by UE, a correspondence between each serving cell of serving cells of the UE and a location, in physical downlink control signaling, of a corresponding TDD uplink-downlink configuration command may be specifically that locations N of TDD uplink-downlink configuration commands are indicated by using index numbers M of serving cells, and may be specifically shown in the following table:

| Index number M of a serving cell | Index number N of a location of a TDD uplink-downlink configuration command |
|---|---|
| Cell 1 | Location 1 |
| Cell 2 | Location 2 |
| Cell 3 | Location 3 |
| Cell 4 | Location 4 |

Both the index number M of a serving cell and the location N of a TDD uplink-downlink configuration command are integers greater than or equal to 0. In this case, a correspondence between serving cells of UE and TDD uplink-downlink configuration commands is shown in FIG. 12.

Preferably, step 501 may further be: UEs separately receive a configuration message sent by a network-side node; step 503 may further be: If the indication message indicates that a configuration function of a TDD uplink-downlink configuration is enabled for the UEs, the UEs separately receive physical downlink control signaling sent by the network-side node. In this case, the UEs separately acquire identifiers of locations of TDD uplink-downlink configuration commands separately corresponding to the serving cells of the UEs according to identifiers of the serving cells of the UEs. In this embodiment of the present invention, multiple UEs separately receive a configuration message and physical downlink control signaling that are sent by a network-side node, so that a quantity of times that the network-side node sends physical downlink control signaling can be reduced, and therefore system signaling overheads can be further reduced.

For this embodiment of the present invention, in a configuration message received by the UEs, a correspondence between each serving cell of serving cells of UE and a location, in physical downlink control signaling, of a corresponding TDD uplink-downlink configuration command may be specifically that locations N of TDD uplink-downlink configuration commands are indicated by using index numbers M of serving cells of index numbers R of the UEs, and may be specifically shown in the following table:

| Index number R of UE | Index number M of a serving cell | Index number N of a location of a TDD uplink-downlink configuration command |
|---|---|---|
| UE 1 | Cell 1 | Location 1 |
| | Cell 2 | Location 2 |
| | Cell 3 | Location 3 |
| | Cell 4 | Location 4 |
| UE 2 | Cell 1 | Location 1 |
| | Cell 2 | Location 2 |
| UE 3 | Cell 1 | Location 1 |
| | Cell 2 | Location 2 |
| | Cell 3 | Location 3 |

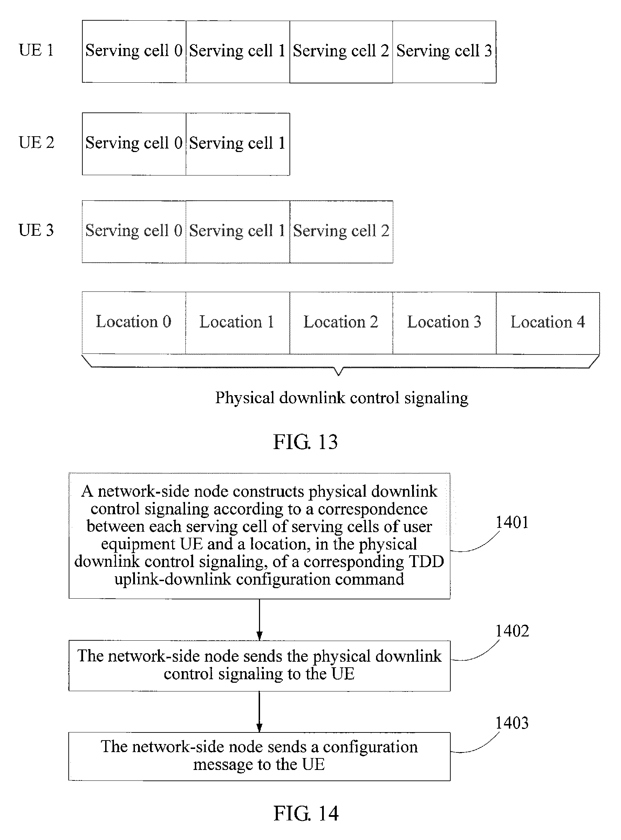

The index number R of UE, the index number M of a serving cell, and the index number N of a location of a TDD uplink-downlink configuration command are all integers greater than or equal to 0. In this case, a correspondence between serving cells of UEs and TDD uplink-downlink configuration commands is shown in FIG. 13.

Further optionally, step 504 may further include: acquiring, by the UE, the TDD uplink-downlink configurations separately corresponding to the serving cells of the UE from the at least one TDD uplink-downlink configuration command according to the correspondence between an identifier of each serving cell of the serving cells of the UE and an identifier of the location, in the physical downlink control signaling, of the corresponding TDD uplink-downlink configuration command.

Optionally, UE may further acquire a TDD uplink-downlink configuration corresponding to a primary serving cell of the UE from TDD uplink-downlink configurations according to an identifier, which is preset in a protocol, of a location of a TDD uplink-downlink configuration command corresponding to the primary serving cell of the UE. In this embodiment of the present invention, when a quantity of cells corresponding to UE is multiple, a network-side node may configure in advance, in a protocol, an identifier of a location of a TDD uplink-downlink configuration corresponding to a primary cell of the UE, which can reduce a quantity of times that the network-side node sends a configuration message, and therefore can further reduce system signaling overheads.

For this embodiment of the present invention, when a quantity of serving cells of UE is one, the serving cell is a primary serving cell of the UE. In this embodiment of the present invention, an identifier of a location of a TDD uplink-downlink configuration command corresponding to a primary serving cell of the UE may be configured in a protocol in advance, which can reduce a quantity of times that the network-side node sends a configuration message, and therefore can further reduce system signaling overheads.

505. The UE determines whether the serving cells of the UE are active serving cells.

For this embodiment of the present invention, step 505 is an optional step.

If the serving cells of the UE are active serving cells, step 506a that the UE applies, for the active serving cells, corresponding TDD uplink-downlink configurations is performed.

Specifically, step 506a that the UE applies, for the active serving cells, corresponding TDD uplink-downlink configurations may include: The UE transmits data to the active serving cells according to the corresponding TDD uplink-downlink configurations; or that the UE applies, for the active serving cells, corresponding TDD uplink-downlink configurations may include: The UE listens, in a downlink subframe or a special subframe in a TDD uplink-downlink configuration corresponding to an active serving cell, on a physical downlink control channel or an enhanced physical downlink control channel. The listening on a physical downlink control channel or an enhanced physical downlink control channel may be listening to an uplink scheduling command or a downlink scheduling command.

For this embodiment of the present invention, step 506a is an optional step.

If the serving cells of the UE are inactive serving cells, step 506b that the UE stores the TDD uplink-downlink configurations corresponding to the inactive serving cells is performed. Optionally, after step 506b, the method may further include: after the inactive serving cells are activated, applying, by the UE, for the serving cells, the stored TDD uplink-downlink configurations.

Preferably, after step 506b, the method may further include: after the inactive serving cells are activated, acquiring, by the UE, TDD uplink-downlink configurations corresponding to the serving cells, and applying, for the serving cells, the acquired TDD uplink-downlink configurations. In this embodiment of the present invention, UE applies, for an active serving cell, a TDD uplink-downlink configuration that is acquired in real time, so that the UE can apply, for the serving cell, the corresponding TDD uplink-downlink configuration in real time, and therefore it can be implemented that the serving cell adapts to variation of a traffic volume.

Optionally, after step 506b, the method may further include: after the inactive serving cells are activated, applying, by the UE, for the serving cells, a TDD uplink-downlink configuration in a serving cell system broadcast message block 1.

For this embodiment of the present invention, step 506b is an optional step.

For this embodiment of the present invention, an uplink resource configured for the UE by the network-side node includes: an uplink SR (schedule request, scheduling request) resource, CQI (channel quality indicator, channel quality indicator) report resource, CSI (Channel Status Information, channel state information) resource, SRS (sounding reference signal, sounding reference signal) resource, PRACH (Physical Random Access Channel, physical random access channel) resource, and the like. Specifically, the UE may report an uplink resource such as the SR resource, the CQI report resource, the CSI resource, the PRACH resource, or the SRS resource according to a preset cycle. For example, the preset cycle may be 1 millisecond, 5 milliseconds, 10 milliseconds, 20 milliseconds, or the like. In this embodiment of the present invention, a location, in a TDD uplink-downlink configuration, of a resource may be determined by using a cycle and an offset that correspond to the resource. For example, a radio frame is sent by using 10 milliseconds as a cycle; if a cycle of the SR resource is 10 milliseconds, and an offset of the SR resource is 2 milliseconds, it indicates that the SR resource is configured, for the UE, in a subframe 2 of each radio frame, that is, the UE may send, in the subframe 2 of each radio frame, an SR by using the SR resource. For another example, a radio frame is sent by using 10 milliseconds as a cycle; if a cycle of the SR resource is 20 milliseconds, and an offset of the SR resource is 3 milliseconds, it indicates that the SR resource is configured, for the UE, in a subframe 3 of an even radio frame, that is, the UE may send, in the subframe 3 of the even radio frame, an SR by using the SR resource. The subframe 3 of the even radio frame includes: a subframe 3 of a radio frame 0, a subframe 3 of a radio frame 2, a subframe 3 of a radio frame 4, or the like.

For this embodiment of the present invention, a TDD uplink-downlink configuration can be dynamically changed; therefore there is a case in which a subframe is indicated, in some radio frames, as an uplink subframe and is indicated, in some radio frames, as a downlink subframe. In this case, there is a case in which a location of an uplink resource configured for the UE conflicts with a subframe direction, and when the UE sends a signal on the uplink resource, and the subframe direction of the resource is downlink, the signal sent by the UE interferes with another UE; in addition, in this case, the signal sent by the UE is an unwanted signal, and therefore a waste of transmit power of the UE is caused.

Optionally, an embodiment of the present invention provides an uplink resource configuration method, specifically including: an uplink resource configured for UE by a network-side node is in an uplink subframe and/or a special subframe in a downlink reference configuration of the UE. The UE may dynamically change a TDD uplink-downlink configuration in a manner provided in this embodiment of the present invention.

When the UE corresponds to only one serving cell, a downlink reference configuration, in the serving cell, of the UE is the downlink reference configuration of the UE. When the UE corresponds to multiple serving cells, a downlink reference configuration, in a primary serving cell or a serving cell for which the uplink resource has been configured, of the UE is the downlink reference configuration of the UE.

For example, as shown in the following table, if a TDD uplink-downlink configuration that is configured for UE can be dynamically changed in a TDD dynamic configuration set {TDD uplink-downlink configuration 0, TDD uplink-downlink configuration 1}, and a downlink reference configuration of the UE is a TDD uplink-downlink configuration 2, according to the method provided in this embodiment of the present invention, the uplink resource can be configured only for an uplink subframe 2, an uplink subframe 7, a special subframe 1, and a special subframe 6.

| TDD uplink-downlink configuration sequence number | Conversion interval | Subframe sequence number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |

The TDD dynamic configuration set may be a set of existing seven TDD uplink-downlink configurations, or may be a set of new TDD uplink-downlink configurations, which is not limited in this embodiment of the present invention. In this embodiment of the present invention, the TDD dynamic configuration set may be a set of TDD uplink-downlink configurations that are fixed or configured, or may be a set of TDD uplink-downlink configurations that are used within a period of time by the UE.

For this embodiment of the present invention, a downlink reference configuration of UE is a configuration, of TDD uplink-downlink configurations, in which quantities of uplink subframes and special subframes of the UE are the smallest, and the uplink subframes and the special subframes in this configuration cannot be dynamically configured as downlink subframes, and therefore the uplink resource is configured in an uplink subframe or a special subframe in the downlink reference configuration of the UE, which can avoid mutual interference between UEs that is caused by a change in a subframe direction.

Alternatively, an embodiment of the present invention provides another uplink resource configuration method, specifically including: an uplink resource configured for UE by a network-side node is in an uplink subframe and/or a special subframe corresponding to a TDD uplink-downlink configuration, in a TDD dynamic configuration set of the UE, in which quantities of uplink subframes and special subframes are the smallest.

For example, if a TDD uplink-downlink configuration that is configured for UE can be dynamically changed in a TDD dynamic configuration set {TDD uplink-downlink configuration 0, TDD uplink-downlink configuration 1}, where quantities of uplink subframes and special subframes in a TDD downlink configuration 1 are the smallest, according to the method provided in this embodiment of the present invention, the uplink resource may be configured in an uplink subframe 2, an uplink subframe 3, an uplink subframe 7, an uplink subframe 8, a special subframe 1, and a special subframe 6.

For this embodiment of the present invention, in the TDD uplink-downlink configuration, in the TDD dynamic configuration set of the UE, in which a quantity of uplink subframes or special subframes is the smallest, the uplink subframes and the special subframes cannot be dynamically configured as downlink subframes, and therefore the uplink resource is configured in an uplink subframe and/or a special subframe in the downlink reference configuration of the UE, which can avoid mutual interference between UEs that is caused by a change in a subframe direction, and additionally can increase a quantity of subframes in which the uplink resource can be configured.

Further, an embodiment of the present invention provides still another uplink resource configuration method, specifically including: a subframe location of the uplink resource configured for UE by a network-side node needs to be an uplink subframe and/or a special subframe, and a direction of another subframe location in which the uplink resource is not configured may be changed into downlink.

Alternatively, a subframe location of the uplink resource configured for UE by a network-side node is limited to a subframe location in which physical downlink control signaling indicates that the subframe is an uplink subframe or a special subframe.

For example, if a TDD uplink-downlink configuration that is configured for UE can be dynamically changed in a TDD dynamic configuration set {TDD uplink-downlink configuration 0, TDD uplink-downlink configuration 1}, a cycle of an uplink resource SR resource is 20 milliseconds, and an offset of the SR resource is 9 milliseconds, the SR resource is configured in a subframe 9 of an even radio frame, that is, a direction of the subframe 9 of the even radio frame cannot be changed into downlink; in addition, the SR resource is not configured in a subframe 9 of an odd radio frame, that is, a direction of the subframe 9 of the odd radio frame may still be changed into downlink. According to the method provided in this embodiment of the present invention, a subframe in which the uplink resource can be configured may include: an uplink subframe 2, an uplink subframe 3, an uplink subframe 7, an uplink subframe 8, the subframe 9 of the even radio frame, a special subframe 1, and a special subframe 6.

For this embodiment of the present invention, the uplink resource needs to be configured in an uplink subframe or a special subframe in the downlink reference configuration of the UE, which can avoid mutual interference between UEs that is caused by a change in a subframe direction, and additionally can configure the uplink resource by using the uplink subframe and/or the special subframe to the greatest extent.

For this embodiment of the present invention, in a scenario of cross-station carrier aggregation, network-side nodes may separately apply, for serving cells, corresponding TDD uplink-downlink configurations according to the method provided in this embodiment of the present invention; in addition, the network-side nodes may also separately apply, for the serving cells, the corresponding TDD uplink-downlink configurations in a manner of interaction.

Specifically, in the scenario of cross-station carrier aggregation, a micro base station may send, by using an Xn interface, information such as a correspondence between serving cells and TDD uplink-downlink configurations and acquiring parameters of the TDD uplink-downlink configurations to a macro base station, so that the macro base station can apply, for micro base stations, corresponding TDD uplink-downlink configurations according to a traffic volume of communication between the micro base stations and UEs. In addition, a macro base station may also apply, for a micro base station, information such as a correspondence between serving cells and TDD uplink-downlink configurations and acquiring parameters of the TDD uplink-downlink configurations according to a traffic volume, a load status, and the like of the macro base station, so that the TDD uplink-downlink configurations corresponding to the serving cells can be applied in real time for micro base stations.

Further, as a specific implementation of the method shown in FIG. 5, an embodiment of the present invention provides a TDD uplink-downlink configuration acquiring apparatus, and as shown in FIG. 6, an entity of the apparatus may be user equipment, such as a mobile phone. The apparatus includes: a receiving unit 61 and an acquiring unit 62.

The receiving unit 61 is configured to receive physical downlink control signaling sent by a network-side node.

The physical downlink control signaling includes at least one TDD uplink-downlink configuration command, where each TDD uplink-downlink configuration command of the at least one TDD uplink-downlink configuration command separately carries a corresponding TDD uplink-downlink configuration.

The receiving unit 61 is further configured to receive a configuration message sent by the network-side node.

The configuration message carries a correspondence between each serving cell of serving cells of the UE and a location, in the physical downlink control signaling, of a corresponding TDD uplink-downlink configuration command.

The acquiring unit 62 is configured to acquire TDD uplink-downlink configurations separately corresponding to the serving cells of the UE from the at least one TDD uplink-downlink configuration command according to the correspondence, which is received by the receiving unit 61, between each serving cell of the serving cells of the UE and a location, in the physical downlink control signaling, of a corresponding TDD uplink-downlink configuration command.

Optionally, the apparatus may further include: an application unit 63.

The application unit 63 is configured to apply, for the serving cells of the UE, the corresponding TDD uplink-downlink configurations acquired by the acquiring unit 62.

The configuration message received by the receiving unit 61 carries a correspondence between an identifier of each serving cell of the serving cells of the UE and an identifier of the location, in the physical downlink control signaling, of the corresponding TDD uplink-downlink configuration command.

The acquiring unit 62 is specifically configured to acquire the TDD uplink-downlink configurations separately corresponding to the serving cells of the UE from the at least one TDD uplink-downlink configuration command according to the correspondence, which is received by the receiving unit 61, between an identifier of each serving cell of the serving cells of the UE and an identifier of the location, in the physical downlink control signaling, of the corresponding TDD uplink-downlink configuration command.

The acquiring unit 62 is specifically configured to acquire identifiers of locations, in the physical downlink control signaling, of TDD uplink-downlink configuration commands separately corresponding to the serving cells of the UE according to the correspondence, which is received by the receiving unit 61, between an identifier of each serving cell of the serving cells of the UE and an identifier of the location, in the physical downlink control signaling, of the corresponding TDD uplink-downlink configuration command.

The acquiring unit 62 is specifically further configured to acquire the TDD uplink-downlink configurations separately corresponding to the serving cells of the UE from the at least one TDD uplink-downlink configuration command according to the identifiers of the locations, in the physical downlink control signaling, of the TDD uplink-downlink configuration commands separately corresponding to the serving cells of the UE.

The acquiring unit 62 is specifically configured to acquire a TDD uplink-downlink configuration corresponding to a primary serving cell of the UE from the at least one TDD uplink-downlink configuration according to an identifier, which is preset in a protocol, of a location, in the physical downlink control signaling, of a TDD uplink-downlink configuration command corresponding to the primary serving cell of the UE.

Optionally, the apparatus may further include: a determining unit 64 and a storage unit 65.

The determining unit 64 is configured to determine whether the serving cells of the UE are active serving cells.

The application unit 63 is specifically configured to: when the determining unit 64 determines that the serving cells of the UE are active serving cells, apply, for the active serving cells, the corresponding TDD uplink-downlink configurations.

The storage unit 65 is configured to: when the determining unit 64 determines that the serving cells of the UE are inactive serving cells, store the TDD uplink-downlink configurations corresponding to the inactive serving cells.

The receiving unit 61 is further configured to receive an indication message sent by the network-side node.

The indication message is used to indicate whether a configuration function of a TDD uplink-downlink configuration is enabled for the UE.

The application unit 63 is specifically configured to: when the indication message received by the receiving unit 61 indicates that the configuration function of the TDD uplink-downlink configuration is enabled for the UE, apply, for the serving cells of the UE, the corresponding TDD uplink-downlink configurations.

The receiving unit 61 is further configured to receive an indication message sent by the network-side node.

The indication message is used to indicate whether a configuration function of a TDD uplink-downlink configuration is enabled for a serving cell.

The application unit 63 is specifically configured to: when the indication message received by the receiving unit 61 indicates that the configuration function of the TDD uplink-downlink configuration is enabled for the serving cell, apply, for the serving cell of the UE, a corresponding TDD uplink-downlink configuration.

Each TDD uplink-downlink configuration command of the at least one TDD uplink-downlink configuration command included in the physical downlink control signaling received by the receiving unit 61 separately corresponds to at least one serving cell.

It should be noted that, for another corresponding description corresponding to functional units in the TDD uplink-downlink configuration acquiring apparatus that is provided in this embodiment of the present invention, reference may be made to the corresponding description in FIG. 5, and details are not described herein again.

Still further, the entity of the TDD uplink-downlink configuration acquiring apparatus may be user equipment. As shown in FIG. 7, the user equipment may include: a processor 71, an input device 72, an output device 73, and a memory 74, where the input device 72, the output device 73, and the memory 74 are separately connected to the processor 71.

The processor 71 is configured to receive physical downlink control signaling sent by a network-side node.

The physical downlink control signaling includes at least one TDD uplink-downlink configuration command, where each TDD uplink-downlink configuration command of the at least one TDD uplink-downlink configuration command separately carries a corresponding TDD uplink-downlink configuration.

The processor 71 is further configured to receive a configuration message sent by the network-side node.

The configuration message carries a correspondence between each serving cell of serving cells of the UE and a location, in the physical downlink control signaling, of a corresponding TDD uplink-downlink configuration command.

The processor 71 is further configured to acquire TDD uplink-downlink configurations separately corresponding to serving cells of the UE from the at least one TDD uplink-downlink configuration command according to the correspondence between each serving cell of the serving cells of the UE and a location, in the physical downlink control signaling, of a corresponding TDD uplink-downlink configuration command.

The processor 71 is further configured to apply, for the serving cells of the UE, the corresponding TDD uplink-downlink configurations.

The configuration message received by the processor 71 carries a correspondence between an identifier of each serving cell of the serving cells of the UE and an identifier of the location, in the physical downlink control signaling, of the corresponding TDD uplink-downlink configuration command.

The processor 71 is further configured to acquire the TDD uplink-downlink configurations separately corresponding to the serving cells of the UE from the at least one TDD uplink-downlink configuration command according to the correspondence between an identifier of each serving cell of the serving cells of the UE and an identifier of the location, in the physical downlink control signaling, of the corresponding TDD uplink-downlink configuration command.

The processor 71 is further configured to acquire identifiers of locations, in the physical downlink control signaling, of TDD uplink-downlink configuration commands separately corresponding to the serving cells of the UE according to the correspondence between an identifier of each serving cell of the serving cells of the UE and an identifier of the location, in the physical downlink control signaling, of the corresponding TDD uplink-downlink configuration command.

The processor 71 is further configured to acquire the TDD uplink-downlink configurations separately corresponding to the serving cells of the UE from the at least one TDD uplink-downlink configuration command according to the identifiers of the locations, in the physical downlink control signaling, of the TDD uplink-downlink configuration commands separately corresponding to the serving cells of the UE.

The processor 71 is further configured to acquire a TDD uplink-downlink configuration corresponding to a primary serving cell of the UE from the at least one TDD uplink-downlink configuration according to an identifier, which is preset in a protocol, of a location, in the physical downlink control signaling, of a TDD uplink-downlink configuration command corresponding to the primary serving cell of the UE.

The processor 71 is further configured to determine whether the serving cells of the UE are active serving cells.

The processor 71 is further configured to: when the serving cells of the UE are active serving cells, apply, for the active serving cells, the corresponding TDD uplink-downlink configurations.

The processor 71 is further configured to: when the serving cells of the UE are inactive serving cells, store the TDD uplink-downlink configurations corresponding to the inactive serving cells.

The processor 71 is further configured to receive an indication message sent by the network-side node.

The indication message is used to indicate whether a configuration function of a TDD uplink-downlink configuration is enabled for the UE.

The processor 71 is further configured to: when the indication message indicates that the configuration function of the TDD uplink-downlink configuration is enabled for the UE, apply, for the serving cells of the UE, the corresponding TDD uplink-downlink configurations.

The processor 71 is further configured to receive an indication message sent by the network-side node.

The indication message is used to indicate whether a configuration function of a TDD uplink-downlink configuration is enabled for a serving cell.

The processor 71 is further configured to: when the indication message indicates that the configuration function of the TDD uplink-downlink configuration is enabled for the serving cell, apply, for the serving cell of the UE, a corresponding TDD uplink-downlink configuration.

Each TDD uplink-downlink configuration command of the at least one TDD uplink-downlink configuration command included in the physical downlink control signaling received by the processor 71 separately corresponds to at least one serving cell.

It should be noted that, for another corresponding description corresponding to devices in the user equipment that is provided in this embodiment of the present invention, reference may be made to the corresponding description in FIG. 5, and details are not described herein again.

According to the TDD uplink-downlink configuration acquiring method and apparatus that are provided in the embodiments of the present invention, first a network-side node sends physical downlink control signaling and a configuration message to user equipment, and then the user equipment acquires TDD uplink-downlink configurations separately corresponding to serving cells from at least one TDD uplink-downlink configuration command according to a correspondence between each serving cell of the serving cells of the UE and a location, in the physical downlink control signaling, of a corresponding TDD uplink-downlink configuration command. Compared with that currently physical downlink control signaling carries only one TDD uplink-downlink configuration command, in the embodiments of the present invention, physical downlink control carries multiple TDD uplink-downlink configuration commands, and a correspondence between cells and locations, in physical downlink control signaling, of the TDD uplink-downlink configuration commands is established, so that a quantity of times that a terminal device receives the physical downlink control signaling can be reduced, and therefore system signaling overheads can be reduced.

An embodiment of the present invention provides still another TDD uplink-downlink configuration acquiring method, and as shown in FIG. 14, the method includes:
1401. A network-side node constructs physical downlink control signaling according to a correspondence between each serving cell of serving cells of user equipment UE and a location, in the physical downlink control signaling, of a corresponding TDD uplink-downlink configuration command.

The physical downlink control signaling includes at least one TDD uplink-downlink configuration command, where each TDD uplink-downlink configuration command of the at least one TDD uplink-downlink configuration command separately carries a corresponding TDD uplink-downlink configuration. In this embodiment of the present invention, constructed physical downlink physical signaling carries multiple TDD uplink-downlink configuration commands, so that a quantity of times that the network-side node sends the physical downlink control signaling can be reduced, and therefore system signaling overheads can be reduced.

For this embodiment of the present invention, the correspondence between each serving cell of the serving cells of the UE and a location, in the physical downlink control signaling, of a corresponding TDD uplink-downlink configuration command is used to instruct the UE to acquire, for the serving cells, corresponding TDD uplink-downlink configurations from the received physical downlink control signaling. In this embodiment of the present invention, by means of a correspondence between serving cells and TDD uplink-downlink configuration commands, it can be implemented that the UE correctly applies, for the serving cells, the corresponding TDD uplink-downlink configurations separately.

1402. The network-side node sends the physical downlink control signaling to the UE.

Optionally, step 1402 may be: The network-side node sends the physical downlink control signaling to the UE according to a preset cycle. The preset cycle may be configured by the network-side node in advance, for example, the preset cycle may be 10 milliseconds, 30 milliseconds, 50 milliseconds, or the like. In this embodiment of the present invention, the network-side node sends the physical downlink control signaling to the UE according to the preset cycle, which can make the UE configure in real time, for cells, corresponding TDD uplink-downlink configurations, and therefore can implement that the serving cells of the UE can adapt to variation of different traffic volumes.

1403. The network-side node sends a configuration message to the UE.

The configuration message carries a correspondence between each serving cell of the serving cells of the UE and a location, in the physical downlink control signaling, of a corresponding TDD uplink-downlink configuration command. In this embodiment of the present invention, identifiers of cells may be index numbers of the cells, and identifiers of the locations of the TDD uplink-downlink configurations may be index numbers of the locations of the TDD uplink-downlink configurations. For example, the index numbers of the cells may be: cell 1, cell 2, cell 3, and the like, and the index numbers of the locations of the TDD uplink-downlink configurations may be: location 1, location 2, location 3, and the like. In this embodiment of the present invention, the configuration message may be a system broadcast message or a dedicated RRC (Radio Resource Control, radio resource control) message, or may be a newly designed message, or an IE (Information Element, information element) newly added to an existing message, which is not limited in this embodiment of the present invention.

For this embodiment of the present invention, the correspondence between serving cells and TDD uplink-downlink configuration commands is used to instruct the UE to acquire, for the serving cells, the corresponding TDD uplink-downlink configurations from the received physical downlink control signaling. For this embodiment of the present invention, by means of a correspondence between serving cells and TDD uplink-downlink configuration commands, it can be implemented that the UE correctly applies, for the serving cells, corresponding TDD uplink-downlink configurations separately.

For this embodiment of the present invention, an uplink resource configured for the UE by the network-side node includes: an uplink SR (schedule request, scheduling request) resource, CQI (channel quality indicator, channel quality indicator) report resource, CSI (Channel Status Information, channel state information) resource, SRS (sounding reference signal, sounding reference signal) resource, PRACH (Physical Random Access Channel, physical random access channel) resource, and the like. Specifically, the UE may report an uplink resource such as the SR resource, the CQI report resource, the CSI resource, the PRACH resource, or the SRS resource according to a preset cycle. For example, the preset cycle may be 1 millisecond, 5 milliseconds, 10 milliseconds, 20 milliseconds, or the like. In this embodiment of the present invention, a location, in a TDD uplink-downlink configuration, of a resource may be determined by using a cycle and an offset that correspond to the resource. For example, a radio frame is sent by using 10 milliseconds as a cycle; if a cycle of the SR resource is 10 milliseconds, and an offset of the SR resource is 2 milliseconds, it indicates that the SR resource is configured, for the UE, in a subframe 2 of each radio frame, that is, the UE may send, in the subframe 2 of each radio frame, an SR by using the SR resource. For another example, a radio frame is sent by using 10 milliseconds as a cycle; if a cycle of the SR resource is 20 milliseconds, and an offset of the SR resource is 3 milliseconds, it indicates that the SR resource is configured, for the UE, in a subframe 3 of an even radio frame, that is, the UE may send, in the subframe 3 of the even radio frame, an SR by using the SR resource. The subframe 3 of the even radio frame includes: a subframe 3 of a radio frame 0, a subframe 3 of a radio frame 2, a subframe 3 of a radio frame 4, or the like.

For this embodiment of the present invention, a TDD uplink-downlink configuration can be dynamically changed; therefore there is a case in which a subframe is indicated, in some radio frames, as an uplink subframe and is indicated, in some radio frames, as a downlink subframe. In this case, there is a case in which a location of an uplink resource configured for the UE conflicts with a subframe direction, and when the UE sends a signal on the uplink resource, and the subframe direction of the resource is downlink, the signal sent by the UE interferes with another UE; in addition, in this case, the signal sent by the UE is an unwanted signal, and therefore a waste of transmit power of the UE is caused.

Optionally, an embodiment of the present invention provides an uplink resource configuration method, specifically including: an uplink resource configured for UE by a network-side node is in an uplink subframe and/or a special subframe in a downlink reference configuration of the UE. The UE may dynamically change a TDD uplink-downlink configuration in a manner provided in this embodiment of the present invention.

When the UE corresponds to only one serving cell, a downlink reference configuration, in the serving cell, of the UE is the downlink reference configuration of the UE. When the UE corresponds to multiple serving cells, a downlink reference configuration, in a primary serving cell or a serving cell for which the uplink resource has been configured, of the UE is the downlink reference configuration of the UE.

For example, as shown in the following table, if a TDD uplink-downlink configuration that is configured for UE can be dynamically changed in a TDD dynamic configuration set {TDD uplink-downlink configuration 0, TDD uplink-downlink configuration 1}, and a downlink reference configuration of the UE is a TDD uplink-downlink configuration 2, according to the method provided in this embodiment of the present invention, the uplink resource can be configured only for an uplink subframe 2, an uplink subframe 7, a special subframe 1, and a special subframe 6.

| TDD uplink-downlink configuration sequence number | Conversion interval | Subframe sequence number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |

The TDD dynamic configuration set may be a set of existing seven TDD uplink-downlink configurations, or may be a set of new TDD uplink-downlink configurations, which is not limited in this embodiment of the present invention. In this embodiment of the present invention, the TDD dynamic configuration set may be a set of TDD uplink-downlink configurations that are fixed or configured, or may be a set of TDD uplink-downlink configurations that are used within a period of time by the UE.

For this embodiment of the present invention, a downlink reference configuration of UE is a configuration, of TDD uplink-downlink configurations, in which quantities of uplink subframes and special subframes of the UE are the smallest, and the uplink subframes and the special subframes in this configuration cannot be dynamically configured as downlink subframes, and therefore the uplink resource is configured in an uplink subframe or a special subframe in the downlink reference configuration of the UE, which can avoid mutual interference between UEs that is caused by a change in a subframe direction.

Alternatively, an embodiment of the present invention provides another uplink resource configuration method, specifically including: an uplink resource configured for UE by a network-side node is in an uplink subframe and/or a special subframe corresponding to a TDD uplink-downlink configuration, in a TDD dynamic configuration set of the UE, in which quantities of uplink subframes and special subframes are the smallest.

For example, if a TDD uplink-downlink configuration that is configured for UE can be dynamically changed in a TDD dynamic configuration set {TDD uplink-downlink configuration 0, TDD uplink-downlink configuration 1}, where quantities of uplink subframes and special subframes in a TDD downlink configuration 1 are the smallest, according to the method provided in this embodiment of the present invention, the uplink resource may be configured in an uplink subframe 2, an uplink subframe 3, an uplink subframe 7, an uplink subframe 8, a special subframe 1, and a special subframe 6.

For this embodiment of the present invention, in the TDD uplink-downlink configuration, in the TDD dynamic configuration set of the UE, in which a quantity of uplink subframes and/or special subframes is the smallest, the uplink subframes and the special subframes cannot be dynamically configured as downlink subframes, and therefore the uplink resource is configured in an uplink subframe and/or a special subframe in the downlink reference configuration of the UE, which can avoid mutual interference between UEs that is caused by a change in a subframe direction, and additionally can increase a quantity of subframes in which the uplink resource can be configured.

Further, an embodiment of the present invention provides still another uplink resource configuration method, specifically including: a subframe location of the uplink resource configured for UE by a network-side node needs to be an uplink subframe or a special subframe, and a direction of another subframe location in which the uplink resource is not configured may be changed into downlink.

Alternatively, a subframe location of the uplink resource configured for UE by a network-side node is limited to a subframe location in which physical downlink control signaling indicates that the subframe is an uplink subframe or a special subframe.

For example, if a TDD uplink-downlink configuration that is configured for UE can be dynamically changed in a TDD dynamic configuration set {TDD uplink-downlink configuration 0, TDD uplink-downlink configuration 1}, a cycle of an uplink resource SR resource is 20 milliseconds, and an offset of the SR resource is 9 milliseconds, the SR resource is configured in a subframe 9 of an even radio frame, that is, a direction of the subframe 9 of the even radio frame cannot be changed into downlink; in addition, the SR resource is not configured in a subframe 9 of an odd radio frame, that is, a direction of the subframe 9 of the odd radio frame may still be changed into downlink. According to the method provided in this embodiment of the present invention, a subframe in which the uplink resource can be configured may include: an uplink subframe 2, an uplink subframe 3, an uplink subframe 7, an uplink subframe 8, the subframe 9 of the even radio frame, a special subframe 1, and a special subframe 6.

For this embodiment of the present invention, the uplink resource needs to be configured in an uplink subframe or a special subframe in the downlink reference configuration of the UE, which can avoid mutual interference between UEs that is caused by a change in a subframe direction, and additionally can configure the uplink resource by using the uplink subframe and/or the special subframe to the greatest extent.

For this embodiment of the present invention, in a scenario of cross-station carrier aggregation, network-side nodes may separately apply, for serving cells, corresponding TDD uplink-downlink configurations according to the method provided in this embodiment of the present invention; in addition, the network-side nodes may also separately apply, for the serving cells, the corresponding TDD uplink-downlink configurations in a manner of interaction.

Specifically, in the scenario of cross-station carrier aggregation, a micro base station may send, by using an Xn interface, information such as a correspondence between serving cells and TDD uplink-downlink configurations and acquiring parameters of the TDD uplink-downlink configurations to a macro base station, so that the macro base station can apply, for micro base stations, corresponding TDD uplink-downlink configurations according to a traffic volume of communication between the micro base stations and UEs. In addition, a macro base station may also apply, for a micro base station, information such as a correspondence between serving cells and TDD uplink-downlink configurations and acquiring parameters of the TDD uplink-downlink configurations according to a traffic volume, a load status, and the like of the macro base station, so that the TDD uplink-downlink configurations corresponding to the serving cells can be applied in real time for micro base stations.

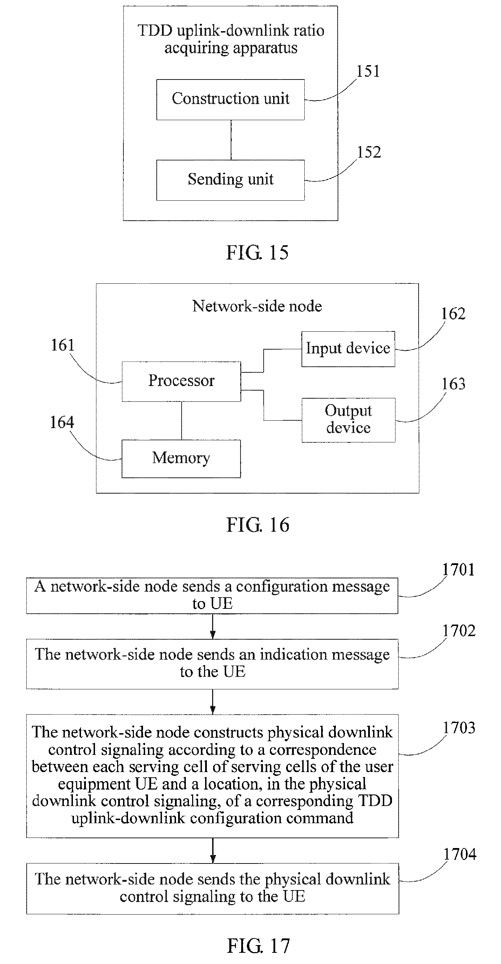

Further, as a specific implementation of the method shown in FIG. 14, an embodiment of the present invention provides a TDD uplink-downlink configuration acquiring apparatus, and as shown in FIG. 15, an entity of the apparatus may be a network-side node. The apparatus includes: a construction unit 151 and a sending unit 152.

The construction unit 151 is configured to construct physical downlink control signaling according to a correspondence between each serving cell of serving cells of user equipment UE and a location, in the physical downlink control signaling, of a corresponding TDD uplink-downlink configuration command.

The physical downlink control signaling includes at least one TDD uplink-downlink configuration command, where each TDD uplink-downlink configuration command of the at least one TDD uplink-downlink configuration command separately carries a corresponding TDD uplink-downlink configuration.

The sending unit 152 is configured to send the physical downlink control signaling constructed by the construction unit 151 to the UE.

The sending unit 152 is further configured to send a configuration message to the UE.

The configuration message carries a correspondence between each serving cell of the serving cells of the UE and a location, in the physical downlink control signaling, of a corresponding TDD uplink-downlink configuration command.

It should be noted that, for another corresponding description corresponding to functional units in the TDD uplink-downlink configuration acquiring apparatus that is provided in this embodiment of the present invention, reference may be made to the corresponding description in FIG. 14, and details are not described herein again.

Still further, the entity of the TDD uplink-downlink configuration acquiring apparatus may be a network-side node. As shown in FIG. 16, the network-side node may include: a processor 161, an input device 162, an output device 163, and a memory 164, where the input device 162, the output device 163, and the memory 164 are separately connected to the processor 161.

The processor 161 is configured to construct physical downlink control signaling according to a correspondence between each serving cell of serving cells of user equipment UE and a location, in the physical downlink control signaling, of a corresponding TDD uplink-downlink configuration command.

The physical downlink control signaling includes at least one TDD uplink-downlink configuration command, where each TDD uplink-downlink configuration command of the at least one TDD uplink-downlink configuration command separately carries a corresponding TDD uplink-downlink configuration.

The processor 161 is further configured to send the physical downlink control signaling to the UE.

The processor 161 is further configured to send a configuration message to the UE.

The configuration message carries a correspondence between each serving cell of the serving cells of the UE and a location, in the physical downlink control signaling, of a corresponding TDD uplink-downlink configuration command.

It should be noted that, for another corresponding description corresponding to devices in the network-side node that is provided in this embodiment of the present invention, reference may be made to the corresponding description in FIG. 14, and details are not described herein again.

According to the TDD uplink-downlink configuration acquiring method and apparatus that are provided in the embodiments of the present invention, first a network-side node sends physical downlink control signaling and a configuration message to user equipment, and then the user equipment acquires TDD uplink-downlink configurations separately corresponding to serving cells from at least one TDD uplink-downlink configuration command according to a correspondence between each serving cell of the serving cells of the UE and a location, in the physical downlink control signaling, of a corresponding TDD uplink-downlink configuration command. Compared with that currently physical downlink control signaling carries only one TDD uplink-downlink configuration command, in the embodiments of the present invention, physical downlink control carries multiple TDD uplink-downlink configuration commands, and a correspondence between cells and locations, in physical downlink control signaling, of the TDD uplink-downlink configuration commands is established, so that a quantity of times that a terminal device receives the physical downlink control signaling can be reduced, and therefore system signaling overheads can be reduced.

An embodiment of the present invention provides yet another TDD uplink-downlink configuration acquiring method, and as shown in FIG. 17, the method includes:
1701. A network-side node sends a configuration message to UE.

The configuration message carries a correspondence between each serving cell of serving cells of the UE and a location, in physical downlink control signaling, of a corresponding TDD uplink-downlink configuration command. In this embodiment of the present invention, identifiers of cells may be index numbers of the cells, and identifiers of locations of TDD uplink-downlink configurations may be index numbers of the locations of the TDD uplink-downlink configurations. For example, the index numbers of the cells may be: cell 1, cell 2, cell 3, and the like, and the index numbers of the locations of the TDD uplink-downlink configurations may be: location 1, location 2, location 3, and the like. In this embodiment of the present invention, the configuration message may be a system broadcast message or a dedicated RRC (Radio Resource Control, radio resource control) message, or may be a newly designed message, or an IE (Information Element, information element) newly added to an existing message, which is not limited in this embodiment of the present invention.

For this embodiment of the present invention, the correspondence between each serving cell of the serving cells of the UE and a location, in the physical downlink control signaling, of a corresponding TDD uplink-downlink configuration command is used to instruct the UE to acquire, for the serving cells, corresponding TDD uplink-downlink configurations from the received physical downlink control signaling. In this embodiment of the present invention, by means of a correspondence between serving cells and TDD uplink-downlink configuration commands, it can be implemented that the UE correctly applies, for the serving cells, the corresponding TDD uplink-downlink configurations separately.

For this embodiment of the present invention, for a description corresponding to a correspondence, in the configuration message sent by the network-side node, between identifiers of the serving cells of the UE and identifiers of locations of the TDD uplink-downlink configuration commands, reference may be made to the corresponding description in Embodiment 2, and details are not described herein again.

1702. The network-side node sends an indication message to the UE.

The indication message may be used to indicate whether a configuration function of a TDD uplink-downlink configuration is enabled for the UE. For example, the indication message may be enabled or disabled.

For this embodiment of the present invention, a new IE may be designed and used as an indication message. For example, a Boolean variable is designed and used as an indication message; if a value of the Boolean variable is true, it indicates that a configuration function of a TDD uplink-downlink configuration is enabled for UE; or if a value of the Boolean variable is false, it indicates that a configuration function of a TDD uplink-downlink configuration is disabled for UE. In this embodiment of the present invention, a new RRC message may be also designed and used as an indication message.

Preferably, an acquiring parameter of a TDD uplink-downlink configuration may be used to implicitly indicate whether a configuration function of a TDD uplink-downlink configuration is enabled for UE. In this embodiment of the present invention, whether a configuration function of a TDD uplink-downlink configuration is enabled for UE is implicitly indicated, so that a quantity of times that a network-side node sends an indication message can be reduced, and therefore system signaling overheads can be further reduced.

The acquiring parameter of the TDD uplink-downlink configuration may be: a radio network temporary identifier, a sending cycle of physical downlink control signaling that carries TDD uplink-downlink configuration commands, reference for configuring TDD uplink ratios, reference for configuring TDD downlink ratios, identifiers of locations, in physical downlink control signaling, of TDD uplink-downlink configuration commands, a correspondence between each serving cell of serving cells of UE and a location, in physical downlink control signaling, of a corresponding TDD uplink-downlink configuration command, or the like. The radio network temporary identifier is used to mask physical downlink control signaling that carries TDD uplink-downlink configuration commands. If an acquiring parameter of a TDD uplink-downlink configuration is configured in advance, it indicates that a configuration function of a TDD uplink-downlink configuration is enabled for UE; or if an acquiring parameter of a TDD uplink-downlink configuration is not configured in advance, it indicates that a configuration function of a TDD uplink-downlink configuration is disabled for UE.

Optionally, the indication message may be further used to indicate whether a configuration function of a TDD uplink-downlink configuration is enabled for a serving cell. For example, the indication message may be enabled or disabled.

For this embodiment of the present invention, a new IE may be designed and used as an indication message. For example, a Boolean variable is designed and used as an indication message; if a value of the Boolean variable is true, it indicates that a configuration function of a TDD uplink-downlink configuration is enabled for a serving cell; or if a value of the Boolean variable is false, it indicates that a configuration function of a TDD uplink-downlink configuration is disabled for a serving cell. In this embodiment of the present invention, a new RRC (Radio Resource Control, radio resource control) message may be also designed and used as an indication message.

Preferably, an acquiring parameter of a TDD uplink-downlink configuration may be used to implicitly indicate whether a configuration function of a TDD uplink-downlink configuration is enabled for a serving cell. In this embodiment of the present invention, whether a configuration function of a TDD uplink-downlink configuration is enabled for a serving cell is implicitly indicated, so that a quantity of times that a network-side node sends an indication message can be reduced, and therefore system signaling overheads can be further reduced.

The acquiring parameter of the TDD uplink-downlink configuration may be: a radio network temporary identifier, a sending cycle of physical downlink control signaling that carries TDD uplink-downlink configuration commands, reference for configuring TDD uplink ratios, reference for configuring TDD downlink ratios, identifiers of locations, in physical downlink control signaling, of TDD uplink-downlink configuration commands, a correspondence between each serving cell of serving cells of UE and a location, in physical downlink control signaling, of a corresponding TDD uplink-downlink configuration command, or the like. The radio network temporary identifier is used to mask physical downlink control signaling that carries TDD uplink-downlink configuration commands. If an acquiring parameter of a TDD uplink-downlink configuration is configured in advance, it indicates that a configuration function of a TDD uplink-downlink configuration is enabled for a serving cell; or if an acquiring parameter of a TDD uplink-downlink configuration is not configured in advance, it indicates that a configuration function of a TDD uplink-downlink configuration is disabled for a serving cell.

For this embodiment of the present invention, step 1702 is an optional step.

1703. The network-side node constructs physical downlink control signaling according to a correspondence between each serving cell of serving cells of the user equipment UE and a location, in the physical downlink control signaling, of a corresponding TDD uplink-downlink configuration command.

The physical downlink control signaling includes at least one TDD uplink-downlink configuration command, where each TDD uplink-downlink configuration command of the at least one TDD uplink-downlink configuration command separately carries a corresponding TDD uplink-downlink configuration. In this embodiment of the present invention, physical downlink physical signaling carries multiple TDD uplink-downlink configuration commands, so that a quantity of times that the network-side node sends the physical downlink control signaling can be reduced, and therefore system signaling overheads can be reduced.

For this embodiment of the present invention, each TDD uplink-downlink configuration command of the at least one TDD uplink-downlink configuration command included in the physical downlink control signaling separately corresponds to at least one serving cell. In this embodiment of the present invention, each TDD uplink-downlink configuration command in the physical control signaling may correspond to one serving cell, or may correspond to one group of serving cells, which is not limited in this embodiment of the present invention. One group of serving cells that correspond to a TDD uplink-downlink configuration command may be multiple serving cells in a same band (Band), or may be multiple serving cells in different bands.

1704. The network-side node sends the physical downlink control signaling to the UE.

Optionally, step 1704 may be: The network-side node sends the physical downlink control signaling to the UE according to a preset cycle. The preset cycle may be configured by the network-side node in advance, for example, the preset cycle may be 10 milliseconds, 30 milliseconds, 40 milliseconds, or the like. In this embodiment of the present invention, the network-side node sends the physical downlink control signaling to the UE according to the preset cycle, which can make the UE apply in real time, for serving cells, corresponding TDD uplink-downlink configurations, and therefore can implement that the serving cells of the UE can adapt to variation of different traffic volumes.

Preferably, when each TDD uplink-downlink configuration in the physical downlink control signaling corresponds to one group of cells, step 1704 may further be: The network-side node sends the physical downlink control signaling to one group of UEs. In this embodiment of the present invention, the network-side node sends the physical downlink control signaling to one group of UEs, so that separately sending, by the network-side node, the physical downlink control signaling to different UEs can be avoided, which thereby can reduce a quantity of times that the network-side node sends the physical downlink control signaling, and therefore can further reduce signaling overheads.

For this embodiment of the present invention, an uplink resource configured for the UE by the network-side node includes: an uplink SR (schedule request, scheduling request) resource, CQI (channel quality indicator, channel quality indicator) report resource, CSI (Channel Status Information, channel state information) resource, SRS (sounding reference signal, sounding reference signal) resource, PRACH (Physical Random Access Channel, physical random access channel) resource, and the like. Specifically, the UE may report an uplink resource such as the SR resource, the CQI report resource, the CSI resource, the PRACH resource, or the SRS resource according to a preset cycle. For example, the preset cycle may be 1 millisecond, 5 milliseconds, 10 milliseconds, 20 milliseconds, or the like. In this embodiment of the present invention, a location, in a TDD uplink-downlink configuration, of a resource may be determined by using a cycle and an offset that correspond to the resource. For example, a radio frame is sent by using 10 milliseconds as a cycle; if a cycle of the SR resource is 10 milliseconds, and an offset of the SR resource is 2 milliseconds, it indicates that the SR resource is configured, for the UE, in a subframe 2 of each radio frame, that is, the UE may send, in the subframe 2 of each radio frame, an SR by using the SR resource. For another example, a radio frame is sent by using 10 milliseconds as a cycle; if a cycle of the SR resource is 20 milliseconds, and an offset of the SR resource is 3 milliseconds, it indicates that the SR resource is configured, for the UE, in a subframe 3 of an even radio frame, that is, the UE may send, in the subframe 3 of the even radio frame, an SR by using the SR resource. The subframe 3 of the even radio frame includes: a subframe 3 of a radio frame 0, a subframe 3 of a radio frame 2, a subframe 3 of a radio frame 4, or the like.

For this embodiment of the present invention, a TDD uplink-downlink configuration can be dynamically changed; therefore there is a case in which a subframe is indicated, in some radio frames, as an uplink subframe and is indicated, in some radio frames, as a downlink subframe. In this case, there is a case in which a location of an uplink resource configured for the UE conflicts with a subframe direction, and when the UE sends a signal on the uplink resource, and the subframe direction of the resource is downlink, the signal sent by the UE interferes with another UE; in addition, in this case, the signal sent by the UE is an unwanted signal, and therefore a waste of transmit power of the UE is caused.

Optionally, an embodiment of the present invention provides an uplink resource configuration method, specifically including: an uplink resource configured for UE by a network-side node is in an uplink subframe and/or a special subframe in a downlink reference configuration of the UE. The UE may dynamically change a TDD uplink-downlink configuration in a manner provided in this embodiment of the present invention.

When the UE corresponds to only one serving cell, a downlink reference configuration, in the serving cell, of the UE is the downlink reference configuration of the UE. When the UE corresponds to multiple serving cells, a downlink reference configuration, in a primary serving cell or a serving cell for which the uplink resource has been configured, of the UE is the downlink reference configuration of the UE.

For example, as shown in the following table, if a TDD uplink-downlink configuration that is configured for UE can be dynamically changed in a TDD dynamic configuration set {TDD uplink-downlink configuration 0, TDD uplink-downlink configuration 1}, and a downlink reference configuration of the UE is a TDD uplink-downlink configuration 2, according to the method provided in this embodiment of the present invention, the uplink resource can be configured only for an uplink subframe 2, an uplink subframe 7, a special subframe 1, and a special subframe 6.

| TDD uplink-downlink configuration sequence number | Conversion interval | Subframe sequence number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |

The TDD dynamic configuration set may be a set of existing seven TDD uplink-downlink configurations, or may be a set of new TDD uplink-downlink configurations, which is not limited in this embodiment of the present invention. In this embodiment of the present invention, the TDD dynamic configuration set may be a set of TDD uplink-downlink configurations that are fixed or configured, or may be a set of TDD uplink-downlink configurations that are used within a period of time by the UE.

For this embodiment of the present invention, a downlink reference configuration of UE is a configuration, of TDD uplink-downlink configurations, in which quantities of uplink subframes and special subframes of the UE are the smallest, and the uplink subframes and the special subframes in this configuration cannot be dynamically configured as downlink subframes, and therefore the uplink resource is configured in an uplink subframe or a special subframe in the downlink reference configuration of the UE, which can avoid mutual interference between UEs that is caused by a change in a subframe direction.

Alternatively, an embodiment of the present invention provides another uplink resource configuration method, specifically including: an uplink resource configured for UE by a network-side node is in an uplink subframe and/or a special subframe corresponding to a TDD uplink-downlink configuration, in a TDD dynamic configuration set of the UE, in which quantities of uplink subframes and special subframes are the smallest.

For example, if a TDD uplink-downlink configuration that is configured for UE can be dynamically changed in a TDD dynamic configuration set {TDD uplink-downlink configuration 0, TDD uplink-downlink configuration 1}, where quantities of uplink subframes and special subframes in a TDD downlink configuration 1 are the smallest, according to the method provided in this embodiment of the present invention, the uplink resource may be configured in an uplink subframe 2, an uplink subframe 3, an uplink subframe 7, an uplink subframe 8, a special subframe 1, and a special subframe 6.

For this embodiment of the present invention, in the TDD uplink-downlink configuration, in the TDD dynamic configuration set of the UE, in which a quantity of uplink subframes and/or special subframes is the smallest, the uplink subframes and the special subframes cannot be dynamically configured as downlink subframes, and therefore the uplink resource is configured in an uplink subframe and/or a special subframe in the downlink reference configuration of the UE, which can avoid mutual interference between UEs that is caused by a change in a subframe direction, and additionally can increase a quantity of subframes in which the uplink resource can be configured.

Further, an embodiment of the present invention provides still another uplink resource configuration method, specifically including: a subframe location of the uplink resource configured for UE by a network-side node needs to be an uplink subframe and/or a special subframe, and a direction of another subframe location in which the uplink resource is not configured may be changed into downlink.

Alternatively, a subframe location of the uplink resource configured for UE by a network-side node is limited to a subframe location in which physical downlink control signaling indicates that the subframe is an uplink subframe or a special subframe.

For example, if a TDD uplink-downlink configuration that is configured for UE can be dynamically changed in a TDD dynamic configuration set {TDD uplink-downlink configuration 0, TDD uplink-downlink configuration 1}, a cycle of an uplink resource SR resource is 20 milliseconds, and an offset of the SR resource is 9 milliseconds, the SR resource is configured in a subframe 9 of an even radio frame, that is, a direction of the subframe 9 of the even radio frame cannot be changed into downlink; in addition, the SR resource is not configured in a subframe 9 of an odd radio frame, that is, a direction of the subframe 9 of the odd radio frame may still be changed into downlink. According to the method provided in this embodiment of the present invention, a subframe in which the uplink resource can be configured may include: an uplink subframe 2, an uplink subframe 3, an uplink subframe 7, an uplink subframe 8, the subframe 9 of the even radio frame, a special subframe 1, and a special subframe 6.

For this embodiment of the present invention, the uplink resource needs to be configured in an uplink subframe or a special subframe in the downlink reference configuration of the UE, which can avoid mutual interference between UEs that is caused by a change in a subframe direction, and additionally can configure the uplink resource by using the uplink subframe and/or the special subframe to the greatest extent.

For this embodiment of the present invention, in a scenario of cross-station carrier aggregation, network-side nodes may separately apply, for serving cells, corresponding TDD uplink-downlink configurations according to the method provided in this embodiment of the present invention; in addition, the network-side nodes may also separately apply, for the serving cells, the corresponding TDD uplink-downlink configurations in a manner of interaction.

Specifically, in the scenario of cross-station carrier aggregation, a micro base station may send, by using an Xn interface, information such as a correspondence between serving cells and TDD uplink-downlink configurations and acquiring parameters of the TDD uplink-downlink configurations to a macro base station, so that the macro base station can apply, for micro base stations, corresponding TDD uplink-downlink configurations according to a traffic volume of communication between the micro base stations and UEs. In addition, a macro base station may also apply, for a micro base station, information such as a correspondence between serving cells and TDD uplink-downlink configurations and acquiring parameters of the TDD uplink-downlink configurations according to a traffic volume, a load status, and the like of the macro base station, so that the TDD uplink-downlink configurations corresponding to the serving cells can be applied in real time for micro base stations.

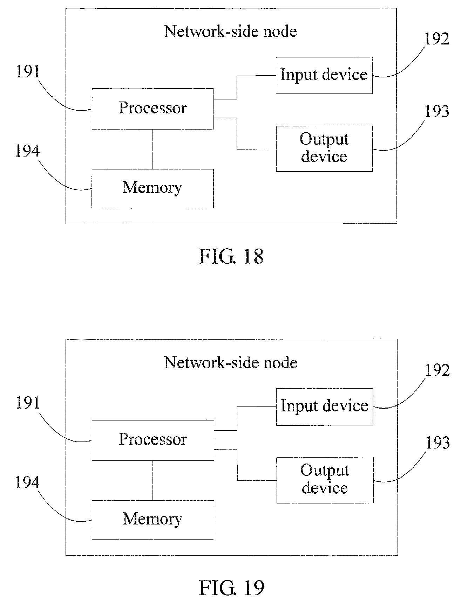

Further, as a specific implementation of the method shown in FIG. 17, an embodiment of the present invention provides a TDD uplink-downlink configuration acquiring apparatus, and as shown in FIG. 18, an entity of the apparatus may be a network-side node. The apparatus includes: a construction unit 181 and a sending unit 182.

The construction unit 181 is configured to construct physical downlink control signaling according to a correspondence between each serving cell of serving cells of user equipment UE and a location, in the physical downlink control signaling, of a corresponding TDD uplink-downlink configuration command.

The physical downlink control signaling includes at least one TDD uplink-downlink configuration command, where each TDD uplink-downlink configuration command of the at least one TDD uplink-downlink configuration command separately carries a corresponding TDD uplink-downlink configuration.

The sending unit 182 is configured to send the physical downlink control signaling constructed by the construction unit 181 to the UE.

The sending unit 182 is further configured to send a configuration message to the UE.

The configuration message carries a correspondence between each serving cell of the serving cells of the UE and a location, in the physical downlink control signaling, of a corresponding TDD uplink-downlink configuration command.

The configuration message sent by the sending unit 182 carries a correspondence between an identifier of each serving cell of the serving cells of the UE and an identifier of the location, in the physical downlink control signaling, of the corresponding TDD uplink-downlink configuration command.

The sending unit 182 is further configured to send an indication message to the UE.

The indication message is used to indicate whether a configuration function of a TDD uplink-downlink configuration is enabled for the UE.

The sending unit 182 is further configured to send an indication message to the UE.

The indication message is used to indicate whether a configuration function of a TDD uplink-downlink configuration is enabled for a serving cell.

Each TDD uplink-downlink configuration command of the at least one TDD uplink-downlink configuration command included in the physical downlink control signaling constructed by the construction unit 181 separately corresponds to at least one serving cell.

It should be noted that, for another corresponding description corresponding to functional units in the TDD uplink-downlink configuration acquiring apparatus that is provided in this embodiment of the present invention, reference may be made to the corresponding description in FIG. 17, and details are not described herein again.

Still further, the entity of the TDD uplink-downlink configuration acquiring apparatus may be a network-side node. As shown in FIG. 19, the network-side node may include: a processor 191, an input device 192, an output device 193, and a memory 194, where the input device 192, the output device 193, and the memory 194 are separately connected to the processor 191.

The processor 191 is configured to construct physical downlink control signaling according to a correspondence between each serving cell of serving cells of user equipment UE and a location, in the physical downlink control signaling, of a corresponding TDD uplink-downlink configuration command.

The physical downlink control signaling includes at least one TDD uplink-downlink configuration command, where each TDD uplink-downlink configuration command of the at least one TDD uplink-downlink configuration command separately carries a corresponding TDD uplink-downlink configuration.

The processor 191 is further configured to send the physical downlink control signaling to the UE.

The processor 191 is further configured to send a configuration message to the UE.

The configuration message carries a correspondence between each serving cell of the serving cells of the UE and a location, in the physical downlink control signaling, of a corresponding TDD uplink-downlink configuration command.

The configuration message sent by the processor 191 carries a correspondence between an identifier of each serving cell of the serving cells of the UE and an identifier of the location, in the physical downlink control signaling, of the corresponding TDD uplink-downlink configuration command.

The processor 191 is further configured to send an indication message to the UE.

The indication message is used to indicate whether a configuration function of a TDD uplink-downlink configuration is enabled for the UE.

The processor 191 is further configured to send an indication message to the UE.

The indication message is used to indicate whether a configuration function of a TDD uplink-downlink configuration is enabled for a serving cell.

Each TDD uplink-downlink configuration command of the at least one TDD uplink-downlink configuration command included in the physical downlink control signaling constructed by the processor 191 separately corresponds to at least one serving cell.

It should be noted that, for another corresponding description corresponding to devices in the network-side node that is provided in this embodiment of the present invention, reference may be made to the corresponding description in FIG. 17, and details are not described herein again.

According to the TDD uplink-downlink configuration acquiring method and apparatus that are provided in the embodiments of the present invention, first a network-side node sends physical downlink control signaling and a configuration message to user equipment, and then the user equipment acquires TDD uplink-downlink configurations separately corresponding to serving cells from at least one TDD uplink-downlink configuration command according to a correspondence between each serving cell of the serving cells of the UE and a location, in the physical downlink control signaling, of a corresponding TDD uplink-downlink configuration command. Compared with that currently physical downlink control signaling carries only one TDD uplink-downlink configuration command, in the embodiments of the present invention, physical downlink control carries multiple TDD uplink-downlink configuration commands, and a correspondence between cells and locations, in physical downlink control signaling, of the TDD uplink-downlink configuration commands is established, so that a quantity of times that a terminal device receives the physical downlink control signaling can be reduced, and therefore system signaling overheads can be reduced.

The TDD uplink-downlink configuration acquiring apparatus provided in this embodiment of the present invention can implement the method embodiments that are provided above; for a specific function implementation, refer to the description in the method embodiments, and details are not described herein again. The TDD uplink-downlink configuration acquiring method and apparatus that are provided in the embodiments of the present invention may apply to a case that UE applies, for serving cells, TDD uplink-downlink configurations, but are merely not limited thereto.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A TDD uplink-downlink configuration acquiring method, comprising:
receiving, by user equipment UE, physical downlink control signaling sent by a network-side node, wherein the physical downlink control signaling comprises at least one TDD uplink-downlink configuration command, and each TDD uplink-downlink configuration command of the at least one TDD uplink-downlink configuration command separately carries a corresponding TDD uplink-downlink configuration;
receiving, by the UE, a configuration message sent by the network-side node, wherein the configuration message carries a correspondence between each serving cell of serving cells of the UE and a location, in the physical downlink control signaling, of a corresponding TDD uplink-downlink configuration command; and
acquiring, by the UE, TDD uplink-downlink configurations separately corresponding to the serving cells of the UE from the at least one TDD uplink-downlink configuration command according to the correspondence between each serving cell of the serving cells of the UE and a location, in the physical downlink control signaling, of a corresponding TDD uplink-downlink configuration command.

2. The method according to claim 1, wherein after the step of acquiring, by the UE, TDD uplink-downlink configurations separately corresponding to the serving cells of the UE from the at least one TDD uplink-downlink configuration command according to the correspondence between each serving cell of the serving cells of the UE and a location, in the physical downlink control signaling, of a corresponding TDD uplink-downlink configuration command, the method further comprises:
applying, by the UE, for the serving cells of the UE, the corresponding TDD uplink-downlink configurations.

3. The method according to claim 1 or 2, wherein the configuration message carries a correspondence between an identifier of each serving cell of the serving cells of the UE and an identifier of the location, in the physical downlink control signaling, of the corresponding TDD uplink-downlink configuration command; and
the step of acquiring, by the UE, TDD uplink-downlink configurations separately corresponding to the serving cells of the UE from the at least one TDD uplink-downlink configuration command according to the correspondence between each serving cell of the serving cells of the UE and a location, in the physical downlink control signaling, of a corresponding TDD uplink-downlink configuration command comprises:
acquiring, by the UE, the TDD uplink-downlink configurations separately corresponding to the serving cells of the UE from the at least one TDD uplink-downlink configuration command according to the correspondence between an identifier of each serving cell of the serving cells of the UE and an identifier of the location, in the physical downlink control signaling, of the corresponding TDD uplink-downlink configuration command.

4. The method according to claim 3, wherein the step of acquiring, by the UE, the TDD uplink-downlink configurations separately corresponding to the serving cells of the UE from the at least one TDD uplink-downlink configuration command according to the correspondence between an identifier of each serving cell of the serving cells of the UE and an identifier of the location, in the physical downlink control signaling, of the corresponding TDD uplink-downlink configuration command comprises:
acquiring, by the UE, identifiers of locations, in the physical downlink control signaling, of TDD uplink-downlink configuration commands separately corresponding to the serving cells of the UE according to the correspondence between an identifier of each serving cell of the serving cells of the UE and an identifier of the location, in the physical downlink control signaling, of the corresponding TDD uplink-downlink configuration command; and
acquiring, by the UE, the TDD uplink-downlink configurations separately corresponding to the serving cells of the UE from the at least one TDD uplink-downlink configuration command according to the identifiers of the locations, in the physical downlink control signaling, of the TDD uplink-downlink configuration commands separately corresponding to the serving cells of the UE.

5. The method according to any one of claims 1 to 4, wherein the step of acquiring, by the UE, TDD uplink-downlink configurations separately corresponding to the serving cells of the UE from the at least one TDD uplink-downlink configuration command according to the correspondence between each serving cell of the serving cells of the UE and a location, in the physical downlink control signaling, of a corresponding TDD uplink-downlink configuration command comprises:
acquiring, by the UE, a TDD uplink-downlink configuration corresponding to a primary serving cell of the UE from the at least one TDD uplink-downlink configuration according to an identifier, which is preset in a protocol, of a location, in the physical downlink control signaling, of a TDD uplink-downlink configuration command corresponding to the primary serving cell of the UE.

6. The method according to any one of claims 2 to 5, wherein before the step of applying, by the UE, for the serving cells of the UE, the corresponding TDD uplink-downlink configurations, the method further comprises:
determining, by the UE, whether the serving cells of the UE are active serving cells; and
the step of applying, by the UE, for the serving cells of the UE, the corresponding TDD uplink-downlink configurations comprises:
if the serving cells of the UE are active serving cells, applying, by the UE, for the active serving cells, the corresponding TDD uplink-downlink configurations; or
if the serving cells of the UE are inactive serving cells, storing, by the UE, the TDD uplink-downlink configurations corresponding to the inactive serving cells.

7. The method according to any one of claims 2 to 6, wherein before the step of configuring, by the UE, for the serving cells of the UE, the corresponding TDD uplink-downlink configurations, the method further comprises:
receiving, by the UE, an indication message sent by the network-side node, wherein the indication message is used to indicate whether a configuration function of a TDD uplink-downlink configuration is enabled for the UE; and
the step of applying, by the UE, for the serving cells of the UE, the corresponding TDD uplink-downlink configurations comprises:
if the indication message indicates that the configuration function of the TDD uplink-downlink configuration is enabled for the UE, applying, by the UE, for the serving cells of the UE, the corresponding TDD uplink-downlink configurations.

8. The method according to any one of claims 2 to 6, wherein before the step of applying, by the UE, for the serving cells of the UE, the corresponding TDD uplink-downlink configurations, the method further comprises:
receiving, by the UE, an indication message sent by the network-side node, wherein the indication message is used to indicate whether a configuration function of a TDD uplink-downlink configuration is enabled for a serving cell; and
the step of applying, by the UE, for the serving cells of the UE, the corresponding TDD uplink-downlink configurations comprises:
if the indication message indicates that the configuration function of the TDD uplink-downlink configuration is enabled for the serving cell, applying, by the UE, for the serving cell of the UE, a corresponding TDD uplink-downlink configuration.

9. The method according to any one of claims 1 to 8, wherein each TDD uplink-downlink configuration command of the at least one TDD uplink-downlink configuration command comprised in the physical downlink control signaling separately corresponds to at least one serving cell.

10. A TDD uplink-downlink configuration acquiring method, comprising:
constructing, by a network-side node, physical downlink control signaling according to a correspondence between each serving cell of serving cells of user equipment UE and a location, in the physical downlink control signaling, of a corresponding TDD uplink-downlink configuration command, wherein the physical downlink control signaling comprises at least one TDD uplink-downlink configuration command, and each TDD uplink-downlink configuration command of the at least one TDD uplink-downlink configuration command separately carries a corresponding TDD uplink-downlink configuration;
sending, by the network-side node, the physical downlink control signaling to the UE; and
sending, by the network-side node, a configuration message to the UE, wherein the configuration message carries the correspondence between each serving cell of the serving cells of the UE and a location, in the physical downlink control signaling, of a corresponding TDD uplink-downlink configuration command.

11. The TDD uplink-downlink configuration acquiring method according to claim 10, wherein the configuration message carries a correspondence between an identifier of each serving cell of the serving cells of the UE and an identifier of the location, in the physical downlink control signaling, of the corresponding TDD uplink-downlink configuration command.

12. The TDD uplink-downlink configuration acquiring method according to claim 10 or 11, wherein after the step of sending, by the network-side node, a configuration message to the UE, the method further comprises:
sending, by the network-side node, an indication message to the UE, wherein the indication message is used to indicate whether a configuration function of a TDD uplink-downlink configuration is enabled for the UE.

13. The TDD uplink-downlink configuration acquiring method according to claim 10 or 11, wherein after the step of sending, by the network-side node, a configuration message to the UE, the method further comprises:
sending, by the network-side node, an indication message to the UE, wherein the indication message is used to indicate whether a configuration function of a TDD uplink-downlink configuration is enabled for a serving cell.

14. The TDD uplink-downlink configuration acquiring method according to any one of claims 10 to 13, wherein each TDD uplink-downlink configuration command of the at least one TDD uplink-downlink configuration command comprised in the physical downlink control signaling separately corresponds to at least one serving cell.

15. A TDD uplink-downlink configuration acquiring apparatus, comprising:
a receiving unit, configured to receive physical downlink control signaling sent by a network-side node, wherein the physical downlink control signaling comprises at least one TDD uplink-downlink configuration command, and each TDD uplink-downlink configuration command of the at least one TDD uplink-downlink configuration command separately carries a corresponding TDD uplink-downlink configuration, wherein
the receiving unit is further configured to receive a configuration message sent by the network-side node, wherein the configuration message carries a correspondence between each serving cell of serving cells of the UE and a location, in the physical downlink control signaling, of a corresponding TDD uplink-downlink configuration command; and
an acquiring unit, configured to acquire TDD uplink-downlink configurations separately corresponding to the serving cells of the UE from the at least one TDD uplink-downlink configuration command according to the correspondence, which is received by the receiving unit, between each serving cell of the serving cells of the UE and a location, in the physical downlink control signaling, of a corresponding TDD uplink-downlink configuration command.

16. The apparatus according to claim 15, wherein the apparatus further comprises: an application unit, wherein
the application unit is configured to apply, for the serving cells of the UE, the corresponding TDD uplink-downlink configurations acquired by the acquiring unit.

17. The apparatus according to claim 15 or 16, wherein
the configuration message received by the receiving unit carries a correspondence between an identifier of each serving cell of the serving cells of the UE and an identifier of the location, in the physical downlink control signaling, of the corresponding TDD uplink-downlink configuration command; and
the acquiring unit is specifically configured to acquire the TDD uplink-downlink configurations separately corresponding to the serving cells of the UE from the at least one TDD uplink-downlink configuration command according to the correspondence, which is received by the receiving unit, between an identifier of each serving cell of the serving cells of the UE and an identifier of the location, in the physical downlink control signaling, of the corresponding TDD uplink-downlink configuration command.

18. The apparatus according to claim 17, wherein
the acquiring unit is specifically configured to acquire identifiers of locations, in the physical downlink control signaling, of TDD uplink-downlink configuration commands separately corresponding to the serving cells of the UE according to the correspondence, which is received by the receiving unit, between an identifier of each serving cell of the serving cells of the UE and an identifier of the location, in the physical downlink control signaling, of the corresponding TDD uplink-downlink configuration command; and
the acquiring unit is specifically further configured to acquire the TDD uplink-downlink configurations separately corresponding to the serving cells of the UE from the at least one TDD uplink-downlink configuration command according to the identifiers of the locations, in the physical downlink control signaling, of the TDD uplink-downlink configuration commands separately corresponding to the serving cells of the UE.

19. The apparatus according to any one of claims 15 to 18, wherein
the acquiring unit is specifically configured to acquire a TDD uplink-downlink configuration corresponding to a primary serving cell of the UE from the at least one TDD uplink-downlink configuration according to an identifier, which is preset in a protocol, of a location, in the physical downlink control signaling, of a TDD uplink-downlink configuration command corresponding to the primary serving cell of the UE.

20. The apparatus according to any one of claims 16 to 19, wherein the apparatus further comprises: a determining unit and a storage unit, wherein
the determining unit is configured to determine whether the serving cells of the UE are active serving cells;
the application unit is specifically configured to: when the determining unit determines that the serving cells of the UE are active serving cells, apply, for the active serving cells, the corresponding TDD uplink-downlink configurations; and
the storage unit is configured to: when the determining unit determines that the serving cells of the UE are inactive serving cells, store the TDD uplink-downlink configurations corresponding to the inactive serving cells.

21. The apparatus according to any one of claims 16 to 20, wherein
the receiving unit is further configured to receive an indication message sent by the network-side node, wherein the indication message is used to indicate whether a configuration function of a TDD uplink-downlink configuration is enabled for the UE; and
the application unit is specifically configured to: when the indication message received by the receiving unit indicates that the configuration function of the TDD uplink-downlink configuration is enabled for the UE, apply, for the serving cells of the UE, the corresponding TDD uplink-downlink configurations.

22. The apparatus according to any one of claims 16 to 20, wherein
the receiving unit is further configured to receive an indication message sent by the network-side node, wherein the indication message is used to indicate whether a configuration function of a TDD uplink-downlink configuration is enabled for a serving cell; and
the application unit is specifically configured to: when the indication message received by the receiving unit indicates that the configuration function of the TDD uplink-downlink configuration is enabled for the serving cell, apply, for the serving cell of the UE, a corresponding TDD uplink-downlink configuration.

23. The apparatus according to any one of claims 15 to 22, wherein
each TDD uplink-downlink configuration command of the at least one TDD uplink-downlink configuration command comprised in the physical downlink control signaling received by the receiving unit separately corresponds to at least one serving cell.

24. A TDD uplink-downlink configuration acquiring apparatus, comprising:
a construction unit, configured to construct physical downlink control signaling according to a correspondence between each serving cell of serving cells of user equipment UE and a location, in the physical downlink control signaling, of a corresponding TDD uplink-downlink configuration command, wherein the physical downlink control signaling comprises at least one TDD uplink-downlink configuration command, and each TDD uplink-downlink configuration command of the at least one TDD uplink-downlink configuration command separately carries a corresponding TDD uplink-downlink configuration; and
a sending unit, configured to send the physical downlink control signaling constructed by the construction unit to the UE, wherein
the sending unit is further configured to send a configuration message to the UE, wherein the configuration message carries the correspondence between each serving cell of the serving cells of the UE and a location, in the physical downlink control signaling, of a corresponding TDD uplink-downlink configuration command.

25. The TDD uplink-downlink configuration acquiring apparatus according to claim 24, wherein
the configuration message sent by the sending unit carries a correspondence between an identifier of each serving cell of the serving cells of the UE and an identifier of the location, in the physical downlink control signaling, of the corresponding TDD uplink-downlink configuration command.

26. The TDD uplink-downlink configuration acquiring apparatus according to claim 24 or 25, wherein
the sending unit is further configured to send an indication message to the UE, wherein the indication message is used to indicate whether a configuration function of a TDD uplink-downlink configuration is enabled for the UE.

27. The TDD uplink-downlink configuration acquiring apparatus according to claim 24 or 25, wherein
the sending unit is further configured to send an indication message to the UE, wherein the indication message is used to indicate whether a configuration function of a TDD uplink-downlink configuration is enabled for a serving cell.

28. The TDD uplink-downlink configuration acquiring apparatus according to any one of claims 24 to 27, wherein
each TDD uplink-downlink configuration command of the at least one TDD uplink-downlink configuration command comprised in the physical downlink control signaling constructed by the construction unit separately corresponds to at least one serving cell.

29. User equipment, comprising: a processor, an input device, an output device, and a memory, wherein
the processor is configured to receive physical downlink control signaling sent by a network-side node, wherein the physical downlink control signaling comprises at least one TDD uplink-downlink configuration command, and each TDD uplink-downlink configuration command of the at least one TDD uplink-downlink configuration command separately carries a corresponding TDD uplink-downlink configuration;
the processor is further configured to receive a configuration message sent by the network-side node, wherein the configuration message carries a correspondence between each serving cell of serving cells of the UE and a location, in the physical downlink control signaling, of a corresponding TDD uplink-downlink configuration command; and
the processor is further configured to acquire, according to the correspondence between each serving cell of the serving cells of the UE and a location, in the physical downlink control signaling, of a corresponding TDD uplink-downlink configuration command, TDD uplink-downlink configurations separately corresponding to the serving cells of the UE from the at least one TDD uplink-downlink configuration command.

30. A network-side node, comprising: a processor, an input device, an output device, and a memory, wherein
the processor is configured to construct physical downlink control signaling according to a correspondence between each serving cell of serving cells of user equipment UE and a location, in the physical downlink control signaling, of a corresponding TDD uplink-downlink configuration command, wherein the physical downlink control signaling comprises at least one TDD uplink-downlink configuration command, and each TDD uplink-downlink configuration command of the at least one TDD uplink-downlink configuration command separately carries a corresponding TDD uplink-downlink configuration;
the processor is further configured to send the physical downlink control signaling to the UE; and
the processor is further configured to send a configuration message to the UE, wherein the configuration message carries the correspondence between each serving cell of the serving cells of the UE and a location, in the physical downlink control signaling, of a corresponding TDD uplink-downlink configuration command.
